# EUROPEAN PATENT APPLICATION

(11) **EP 1 902 890 A2**
(43) Date of publication of application: **26.03.2008**
(21) Application number: 07116236.6
(22) Date of filing: 12.09.2007
(51) Int. Cl.: B60K 17/10

(54) **Power transmission structure of working vehicle**

(30) Priority: 19.09.2006 JP 2006252147; 10.10.2006 JP 2006276208
(71) Applicant: KANZAKI KOKYUKOKI MFG. CO., LTD., Amagasaki-shi, Hyogo 661-0981 (JP)
(72) Inventor: Kawakami, Manabu, 2-chome Amagasaki-shi Hyogo Hyogo 661-0981 (JP); Sumomozawa, Hironori, 2-chome Amagasaki-shi Hyogo Hyogo 661-0981 (JP)
(74) Representative: Skuhra, Udo

(57) **Abstract**

There is provided a power transmission structure of a working vehicle (1A-1E) that is configured so that a hydraulic pump unit (100) and a working machine (80) are operatively driven by a rotational power from a single driving power source (30), wherein the hydraulic pump unit (100) is operatively connected to the driving power source (30) through a shaft transmission mechanism (200), and the working machine (80) is operatively connected to the driving power source (30) through an endless belt transmission mechanism (250).

## Description

### BACKGROUND OF THE INVENTION

### Field of the Invention

The present invention relates to a power transmission structure of a working vehicle that is configured such that both a hydraulic pump unit forming a traveling system transmission mechanism and a working machine such as a mower device are driven by a rotational power from a single driving power source.

### Related Art

A working vehicle attached with a working machine, such as a riding lawn mower, is conventionally configured so that a hydraulic pump unit forming a traveling system transmission mechanism and a working machine such as a mower device are driven by a single driving power source.

For instance, US2005/0098363A1 (hereinafter referred to as prior document 1) discloses a power transmission structure of a working vehicle configured such that power transmission from the driving power source to the hydraulic pump unit and the working machine are respectively performed through shaft transmission mechanisms.

Specifically, the hydraulic pump unit disclosed in prior document 1 includes a pump shaft that is shaft-connected to the driving power source through a shaft coupling, a hydraulic pump main body rotatably driven by the pump shaft, a pump case for accommodating the hydraulic pump main body, a PTO clutch mechanism accommodated in the pump case, a transmission gear mechanism accommodated in the pump case so as to operatively connect the pump shaft and a driving side of the PTO clutch mechanism, and a PTO shaft supported by the pump case while being operatively connected to a driven side of the PTO clutch mechanism.

The PTO shaft is connected to the working machine by way of a transmission shaft arranged with universal joints at both ends.

The power transmission structure of the working vehicle is advantageous in terms of transmission efficiency since both the hydraulic pump unit and the working machine are operatively connected to the driving power source by way of shaft transmission mechanisms, but has the following drawbacks.

In the above configuration, vibration of the driving power source is easily transmitted to the working machine, and thus a complex mechanism such as a universal joint is required in a power transmitting path from the driving power source to the working machine in order to absorb such vibration.

Furthermore, the working machine is generally supported by a vehicle frame in an elevating manner. Therefore, if the driving power source and the working machine are operatively connected by way of the shaft transmission mechanism, a configuration that allows the working machine to relatively move with respect to the driving power source must be arranged in the shaft transmission mechanism, and in regards to such an aspect as well, the power transmission structure from the driving power source to the working machine becomes complex and its cost increases.

In particular, in an articulate type vehicle in which a first frame and a second frame are connected in a swinging manner about a pivot shaft along a vertical direction, the working machine must relatively move in a right and left directions with respect to the power driving source in addition to the relative movement in the up and down directions at the time when the working machine is elevated if the driving power source is supported by one of the first and second frames and the working machine is supported by the other frame. Therefore, the shaft transmission mechanism for operatively connecting the driving power source and the working machine becomes even more complex and the cost further increases.

Japanese Laid-Open Patent Publication No. 2005-295944 (hereinafter referred to as prior document 2), on the other hand, discloses a power transmission structure of a working vehicle configured such that power transmissions from the driving power source to the hydraulic pump unit and the working machine are respectively carried out via pulley-belt transmission mechanisms.

In the power transmission structure disclosed in prior document 2, vibration propagation from the driving power source to the working machine can be effectively suppressed, and at the same time, the relative movement of the working machine with respect to the driving power source can be performed in a relatively easy manner since the working machine is operatively connected to the driving power source by way of the pulley-belt transmission mechanism. However, transmission efficiency of the traveling system transmission mechanism lowers since the power is also transmitted to the hydraulic pump unit forming the traveling system transmission mechanism by way of the pulley-belt transmission mechanism.

Furthermore, the power transmission structure according to prior document 2 requires a large space for the power transmission structure since the pulley-belt transmission mechanism for transmitting power from the driving power source to the hydraulic pump unit and the pulley-belt transmission mechanism for transmitting power from the driving power source to the working machine are completely independent, resulting in enlarging the vehicle and lowering the degree of freedom of design.

### SUMMARY OF THE INVENTION

In view of the prior art, it is an object of the present invention to provide a power transmission structure of a working vehicle configured such that a hydraulic pump unit and a working machine are operatively driven by a single driving power source, the power transmission structure capable of enhancing the transmission efficiency from the driving power source to the hydraulic pump unit, and preventing the vibration of the driving powers source to be transmitted to the working machine and allowing the working machine to move relatively to the driving power source without the need for a complex configuration.

The present invention provides a power transmission structure of a working vehicle that is configured so that a hydraulic pump unit and a working machine are operatively driven by a rotational power from a single driving power source, wherein the hydraulic pump unit is operatively connected to the driving power source through a shaft transmission mechanism, and the working machine is operatively connected to the driving power source through an endless belt transmission mechanism.

According to the power transmission structure of the working vehicle of the present invention, it is possible to enhance the transmission efficiency from the driving power source to the hydraulic pump unit forming a traveling system transmission mechanism, and transmit the power from the driving power source to the working machine while preventing the vibration of the driving power source to be transmitted to the working machine and allowing the working machine to move relatively to the driving power source.

In particular, the power transmission structure according to the present invention is effective in an articulate type working vehicle including a first frame and a second frame connected in a swingable manner with respect to each other through a substantially perpendicular pivot shaft, where the driving power source and the hydraulic pump unit are supported by one of the first and the second frames and the working machine is supported by the other one of the first and the second frames.

Preferably, the power transmission structure may further includes an attachment member that has a base part connected to the driving power source and a supporting part for supporting the hydraulic pump unit, the attachment member being configured so that an installation space for the shaft transmission mechanism is created between the base part and the supporting part. The endless belt transmission mechanism includes a power takeoff pulley arranged in the installation space so as to take out the rotational power from a power transmitting path extending from the driving power source to a pump shaft of the hydraulic pump unit through the shaft transmission mechanism, and an endless belt (265) that is wound around the power takeoff pulley. The attachment member is provided with a first opening for allowing the endless belt to extend outward from the installation space.

According to the configuration, it is possible to downsize the power transmission structure from the driving power source to the hydraulic pump unit and the working machine as much as possible.

More preferably, the shaft transmission mechanism may include a coupling member that is supported in a relatively non-rotatable manner by one of an output member for outputting the rotational power of the driving powers source and a pump shaft of the hydraulic pump unit (100) and that is capable of being connected to the other of the output member and the pump shaft in a relatively non-rotatable manner. In the configuration, the power takeoff pulley may be supported in a relatively non-rotatable manner by the coupling member.

Much more preferably, the pump shaft and the output member are positioned coaxially to each other in a state where a gap having a size that allows the endless belt to be passed therethrough is provided between the opposing ends of the pump shaft and the output member with the hydraulic pump unit supported by the driving power source through the attachment member. The coupling member is movable along the axis line direction with respect to the one of the output member and the pump shaft so as to take a connecting position at which the coupling member is capable of being connected to the other of the output member and the pump shaft and an opening position at which the gap is partially or entirely opened so that the endless belt can be passed trough the gap.

According to the configuration, it is possible to attach and detach the endless belt to and from the power takeoff pulley with the hydraulic pump unit supported by the driving power source. Consequently, the workability in assembling and maintaining the endless belt transmission mechanism could be enhanced.

For example, the output member may include a main body part operatively connected to the driving power source, an output shaft part separate from the main body part, and an elastic member for connecting the main body part and the output shaft part. The coupling member is supported by the pump shaft in a relatively non-rotatable manner and a movable manner along the axis line direction, and is capable of being connected to the output shaft part when positioned at the connecting position.

According to the configuration, it is possible to obtain, in addition to the advantage that the attachment and detachment works of the endless belt could be performed with the hydraulic pump unit supported by the driving power source, an advantage that a variation in angular speed of the driving power source could be effectively prevented from being transmitted to the pump shaft.

In one embodiment, the shaft transmission mechanism includes a coupling member that is supported by the pump shaft in a relatively non-rotatable manner and in a movable manner along the axis line direction and that is detachably connected to an output member for outputting the rotational power of the driving power source. The coupling member includes a rigid upstream-side member that is detachably connected to the output member and that supports the power takeoff pulley in a relatively non-rotatable manner, a rigid downstream-side member that is supported by the pump shaft in a relatively non-rotatable manner and in a movable manner along the axis line direction, and the elastic member that connects the upstream-side member and the downstream-side member. The coupling member is configured so that a gap having a size that allows the endless belt could be passed therethrough is created between the upstream-side member and the output member by disconnecting the upstream-side member to the output member and moving the downstream-side member to a downstream side in a power transmitting direction along the axis line direction of the pump shaft.

According to the configuration, it is possible to obtain, in addition to the advantage that the attachment and detachment works of the endless belt could be performed with the hydraulic pump unit supported by the driving power source, an advantage that a variation in angular speed of the driving power source could be effectively prevented from being transmitted to the pump shaft and an advantage that a tension of the endless belt could be prevented from acting on the pump shaft.

In another embodiment, the pump shaft and the output member are positioned coaxially to each other in a state where a gap having a size that allows the endless belt to be passed therethrough is provided between the opposing ends of the pump shaft and the output member. The shaft transmission mechanism includes a coupling member supported in a relatively non-rotatable manner and in a movable manner along the axis line direction by one of an output member for outputting the rotational power of the driving powers source and a pump shaft of the hydraulic pump unit. The coupling member takes a connecting position at which the coupling member is capable of being connected to the other of the output member and the pump shaft, and an opening position at which the gap is partially or entirely opened so that the endless belt can be passed, in respect to the axis line direction. The power takeoff pulley is supported by the output member in a relatively non-rotatable manner.

According to the configuration, it is possible to attach and detach the endless belt with the hydraulic pump unit supported by the driving power source, and to effectively prevent a tension of the endless belt from acting on the pump shaft.

Preferably, the coupling member is provided with an elastic member, and the coupling member is connected to the other of the output member and the pump shaft through the elastic member when positioned at the connecting position.

According to the configuration, it is possible to obtain, in addition to the above advantages, an advantage that a variation in angular speed of the driving power source could be effectively prevented from being transmitted to the pump shaft.

In the above various configurations, the attachment member may include the base part, the supporting part, and a sidewall part connecting the base part and the supporting part so that the installation space is defined between the base part and the supporting part. The sidewall-part is provided with a second opening at a side opposite to the first opening with the pump shaft as the reference, the second opening allowing an access to the power takeoff pulley.

According to the configuration, it is possible to easily perform the attachment and detachment works of the endless belt to and from the power takeoff pulley.

Preferably, the attachment member is provided, at the sidewall, with mounting surfaces to which mounting stays directly or indirectly connected to a vehicle frame are connected.

According to the configuration, it is possible to have an assembly, which is formed by the driving power source and the attachment member, stably supported by the vehicle frame.

In the above various configurations, first and second auxiliary pump units are connected in series to a side opposite to the side connecting to the attachment member of the hydraulic pump unit. The second auxiliary pump unit is spaced away than the first auxiliary pump unit from the hydraulic pump unit and has a second auxiliary pump case formed with a common suction port for both of a first auxiliary pump main body of the first auxiliary pump unit and a second auxiliary pump main body of the second auxiliary pump unit.

According to the configuration, it is possible to simplify a suction side conduit of both the auxiliary pump unit, and to effectively prevent the suction side conduit from interfering with hydraulic conduits that are fluidly connected to the hydraulic pump unit.

### BRIEF DESCRIPTION OF THE DRAWINGS

The above, and other objects, features and advantages of the present invention will become apparent from the detailed description thereof in conjunction with the accompanying drawings wherein.
Fig. 1 is a side view of a working vehicle to which a first embodiment of the present embodiment is applied.
Fig. 2 is a plan view of the working vehicle shown in Fig. 1.
Fig. 3 is a hydraulic circuit diagram of the working vehicle shown in Figs. 1 and 2.
Fig. 4 is a vertical side view of the vicinity of a hydraulic pump unit included in the working vehicle shown in Figs. 1 to 3.
Fig. 5 is an end view of the hydraulic pump unit taken along line V-V in Fig. 4.
Fig. 6 is a perspective view of an attachment member for having the hydraulic pump unit supported by a driving power source.
Fig. 7 is a partial vertical side view of the vicinity of the hydraulic pump unit, showing a state where a coupling member of a shaft transmission mechanism is positioned at an opening position.
Fig. 8 is a vertical side view of the hydraulic pump unit.
Fig. 9 is a traverse plan view of the hydraulic pump unit.
Fig. 10 is an end view of the hydraulic pump unit taken along line X-X in Fig. 8.
Fig. 11 is a cross sectional view of a port block of the hydraulic pump unit taken along line XI-XI in Fig. 8.
Fig. 12 is a cross sectional view of a first auxiliary pump case taken along line XII-XII in Fig. 8.
Fig. 13 is an end view of a second auxiliary pump case taken along line XIII-XIII in Fig. 8.
Fig. 14 is a partial vertical cross sectional view of a hydraulic pump unit included in a working vehicle to which a second embodiment of the present invention is applied.

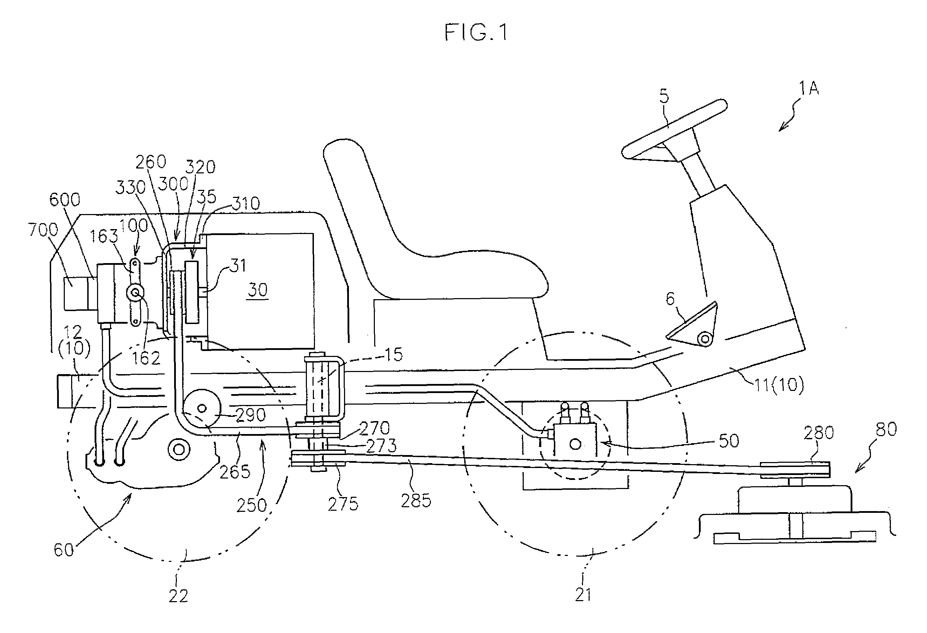

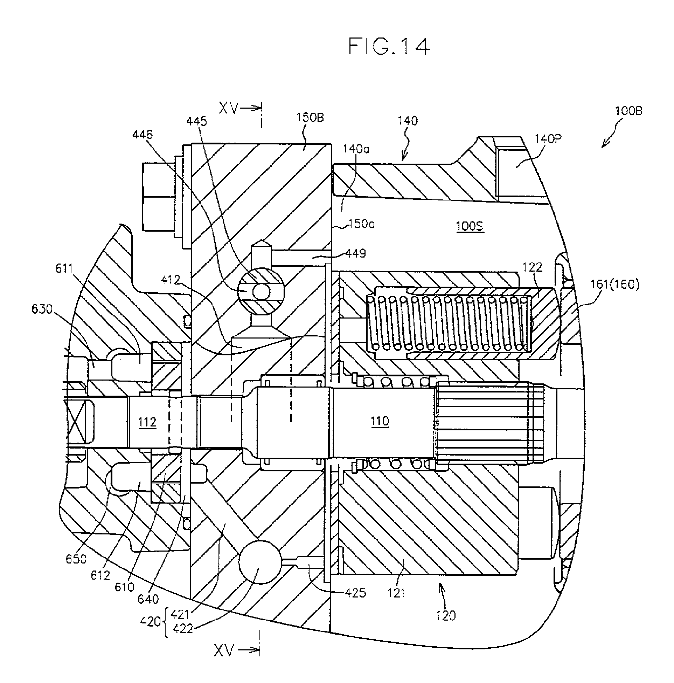

Fig. 1.5 is a cross sectional view of a port block taken along line XV-XV in Fig. 14.

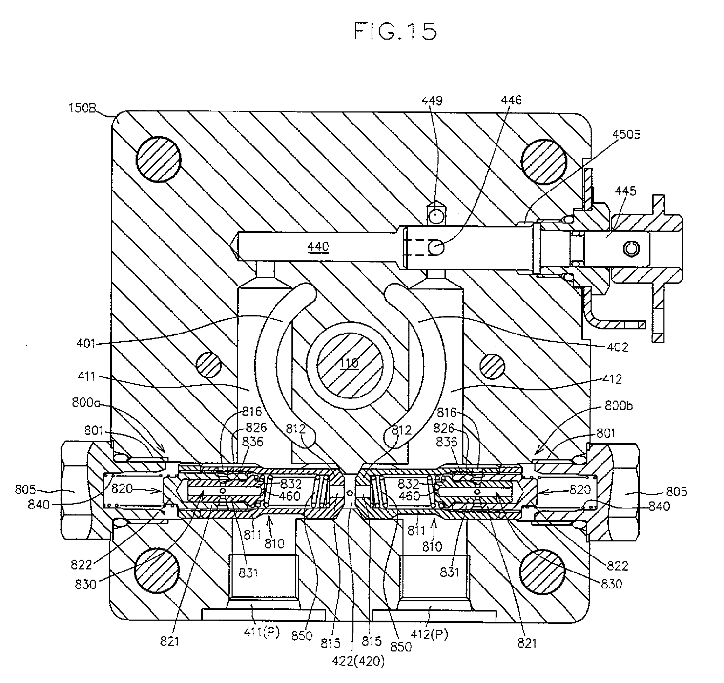

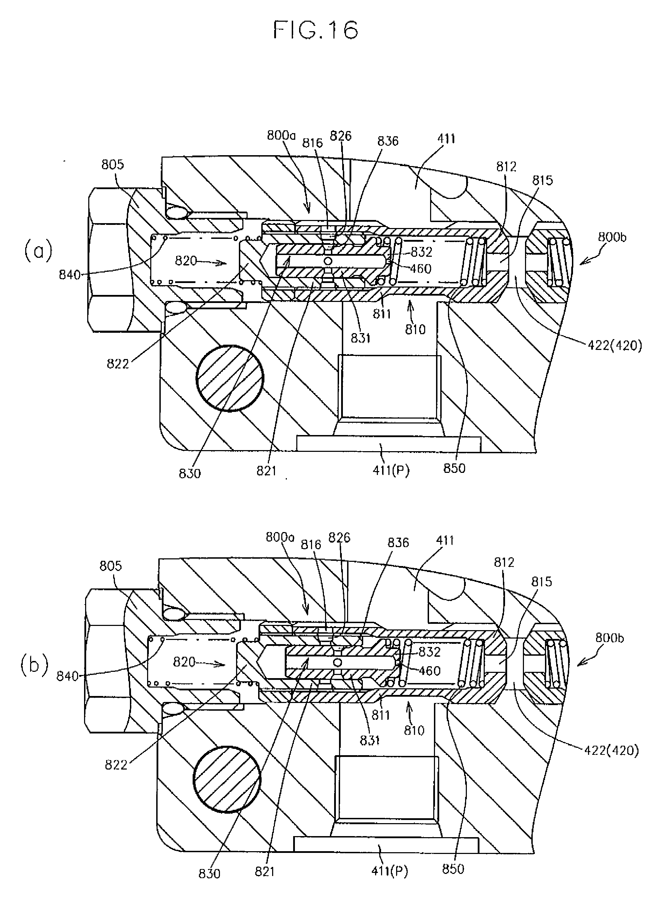

Fig. 16 is a partial cross sectional view of the port block shown in Fig. 15. Fig. 16(a) and 16(b) respectively show states where hydraulic pressure of a corresponding hydraulic fluid passage is lower and higher than a predetermined value.

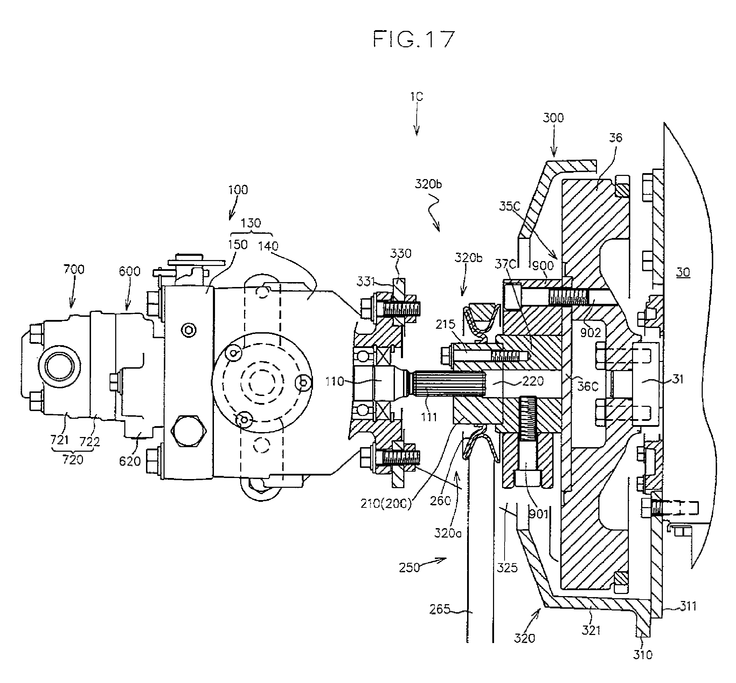

Fig. 17 is a vertical side view of the vicinity of the driving power source and the hydraulic pump unit in a working vehicle to which a third embodiment of the present invention is applied.

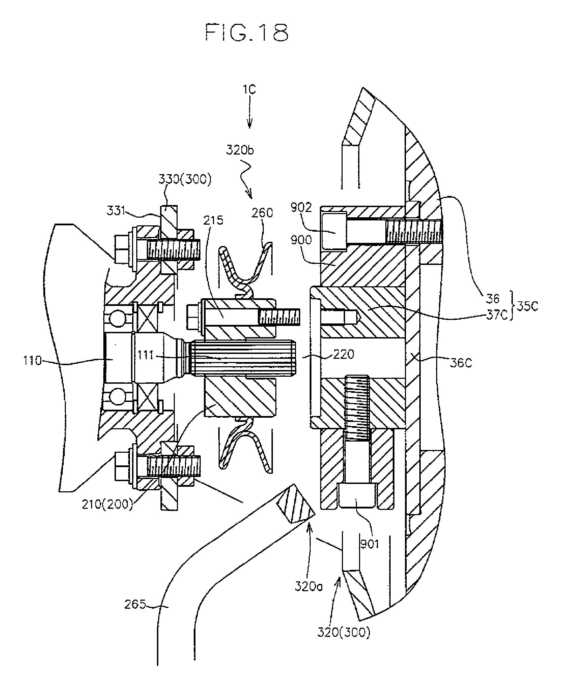

Fig. 18 is a vertical side view of the vicinity of the driving power source and the hydraulic pump unit shown in Fig. 17, and shows a state where a coupling member is positioned at an opening position.

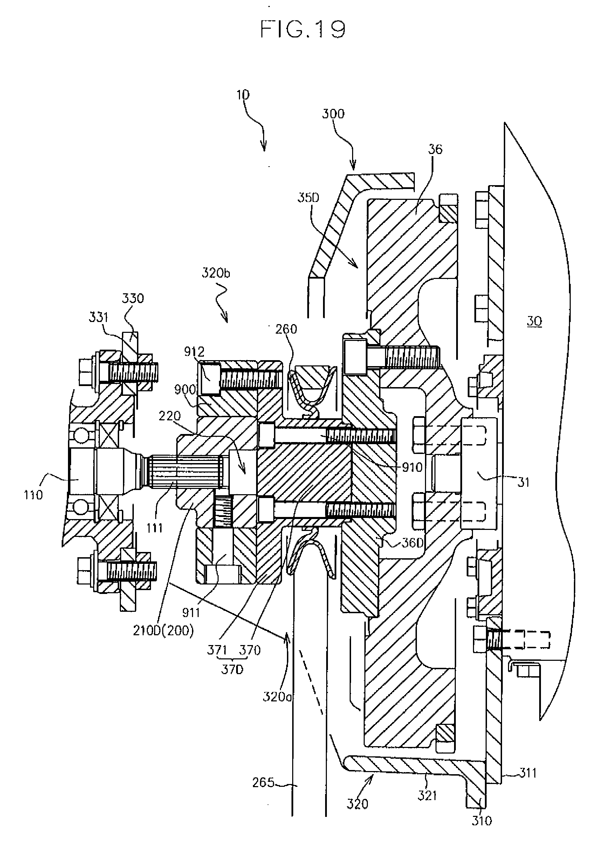

Fig. 19 is a vertical side view of the vicinity of the driving power source and the hydraulic pump unit in a working vehicle to which a fourth embodiment of the present invention is applied.

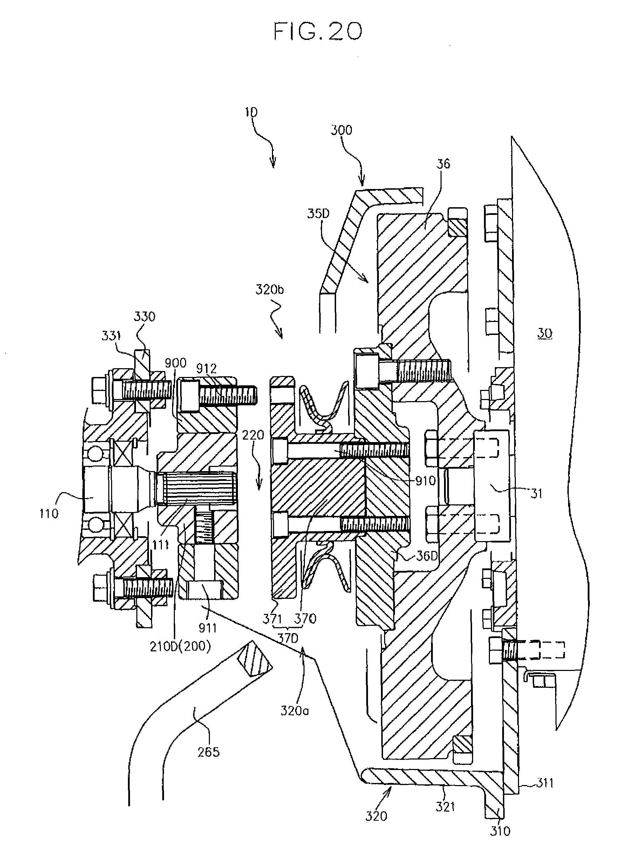

Fig. 20 is a vertical side view of the vicinity of the driving power source and the hydraulic pump unit shown in Fig. 19, and shows a state where a coupling member is positioned at an opening position.

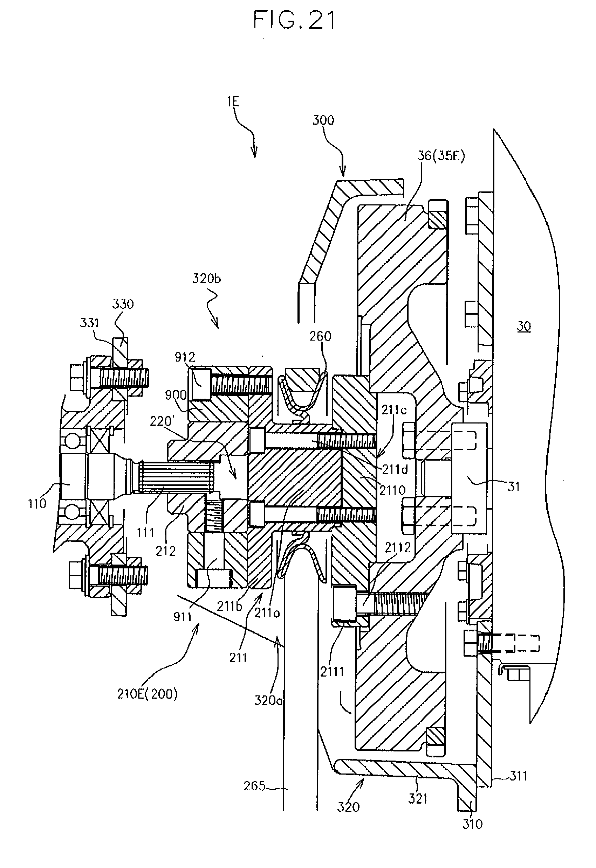

Fig. 21 is a vertical side view of the vicinity of the driving power source and the hydraulic pump unit in a working vehicle to which a fifth embodiment of the present invention is applied.

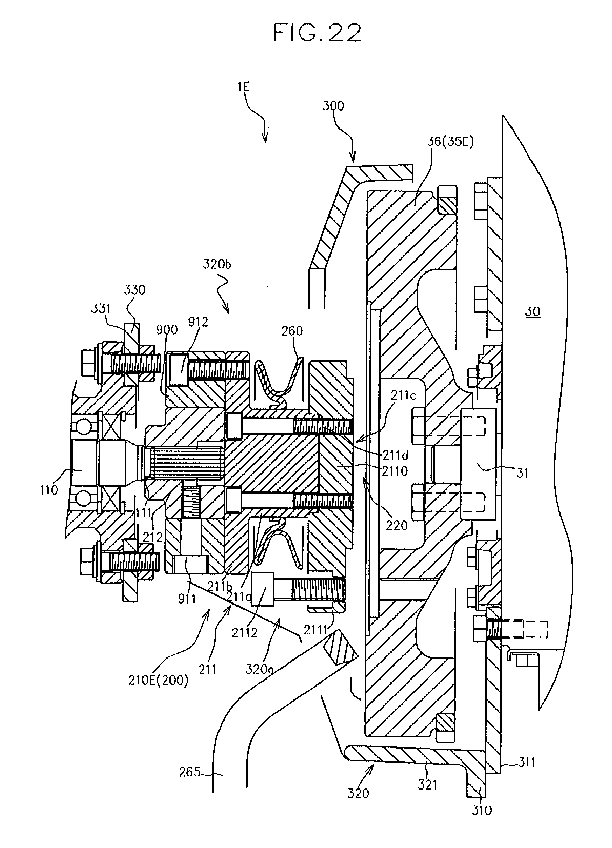

Fig. 22 is a vertical side view of the vicinity of the driving power source and the hydraulic pump unit shown in Fig. 20, and shows a state where a coupling member is positioned at an opening position.

### DETAILED DESCRIPTION OF THE PREFERRED EMBODIMENTS

### First embodiment

A preferred embodiment of the present invention will now be described with reference to the accompanying drawings.

Figs. 1 to 3 respectively show a side view, a plan view, and a hydraulic circuit diagram of a working vehicle 1A to which the present embodiment is applied.

As shown in Figs. 1 to 3, the working vehicle 1A includes a vehicle frame 10; a pair of left and right first driving wheels 21L, 21R arranged on one side in a vehicle longitudinal direction of the vehicle frame 10; a pair of left and right second driving wheels 22L, 22R arranged on the other side in the vehicle longitudinal direction of the vehicle frame 10; a driving power source 30 supported by the vehicle frame 10; a hydraulic pump unit 100 including at least one hydraulic pump main body 120 operatively driven by the driving power source 30; a first axle-driving device 50 including at least one hydraulic motor main body 501 for driving the pair of left and right first driving wheels 21L, 21R and connected to the vehicle frame 10; a second axle-driving device 60 including at least one hydraulic motor main body 551 for driving the pair of left and right second driving wheels 22L, 22R and connected to the vehicle frame 10; and a working machine 80 (a mower device in the present embodiment) supported by the vehicle frame 10 in a state of being operatively driven by the driving power source 30.

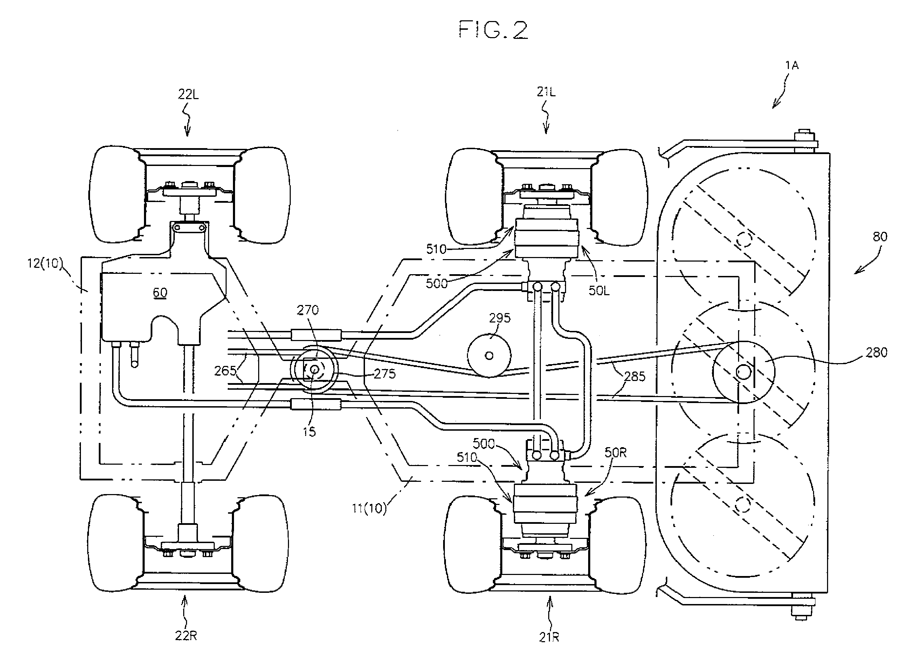

In the present embodiment, the working vehicle 1A is an articulate type riding lawn mower, as shown in Figs. 1 and 2.

Specifically, the vehicle frame 10 includes a first frame 11 arranged on the one side (a front side in the present embodiment) in the vehicle longitudinal direction; and a second frame 12 arranged on the other side (a rear side in the present embodiment) in the vehicle longitudinal direction, the second frame 12 being connected to the first frame 11 in a swingable manner about a pivot shaft 10 extending in a substantially vertical direction

In the present embodiment, the driving power source 30 and the hydraulic pump unit 100 are supported by the second frame 12, and the working machine 80 is supported by the first frame 11.

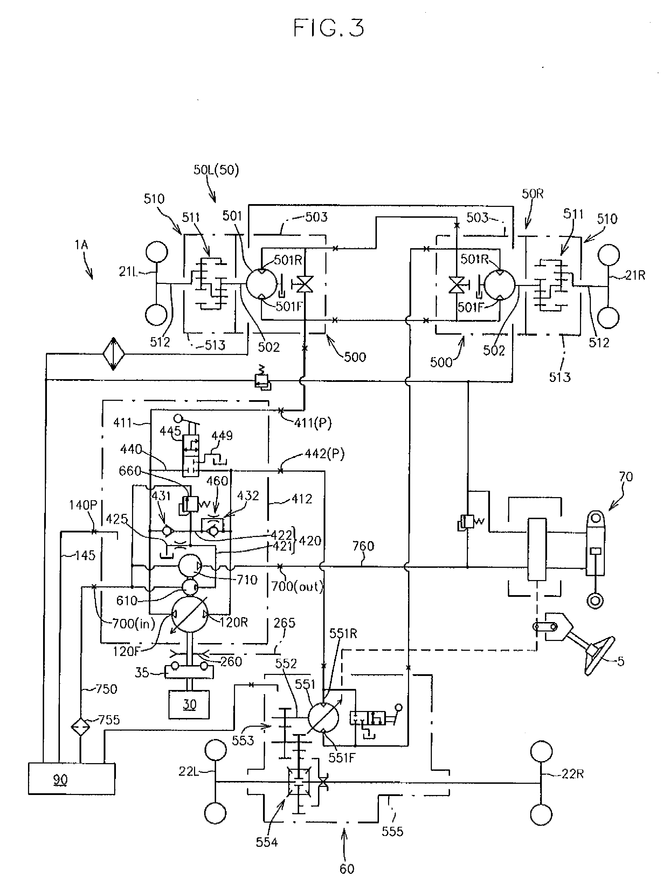

In the present embodiment, as shown in Fig. 3, the working vehicle 1A further includes a hydraulic steering mechanism 70 that swings the first frame 11 and the second frame 12 relatively to each other about the pivot shaft 10 in conjunction with a steering member 5 capable of being manually operated such as a steering wheel.

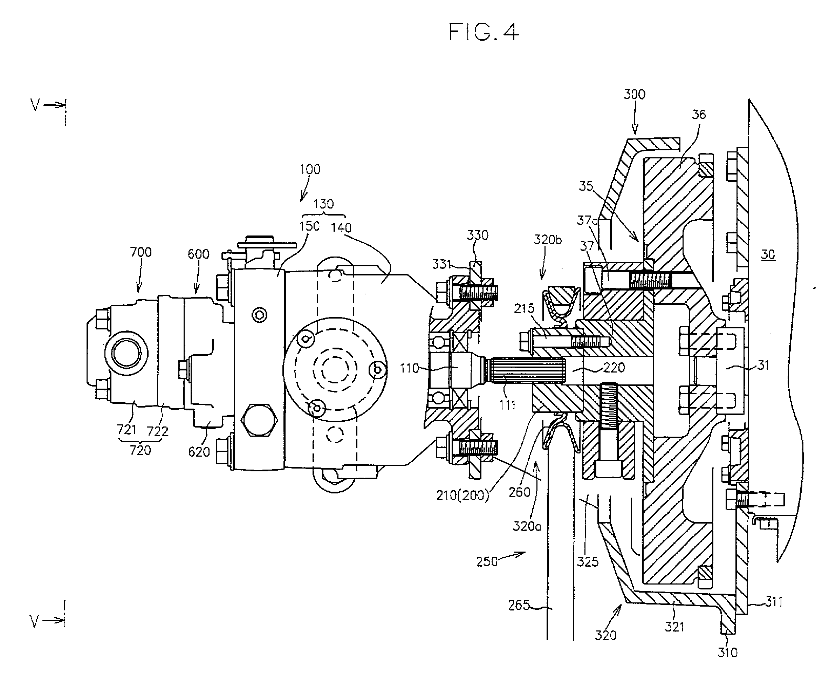

Fig. 4 shows a vertical side view of the vicinity of the hydraulic pump unit 100.

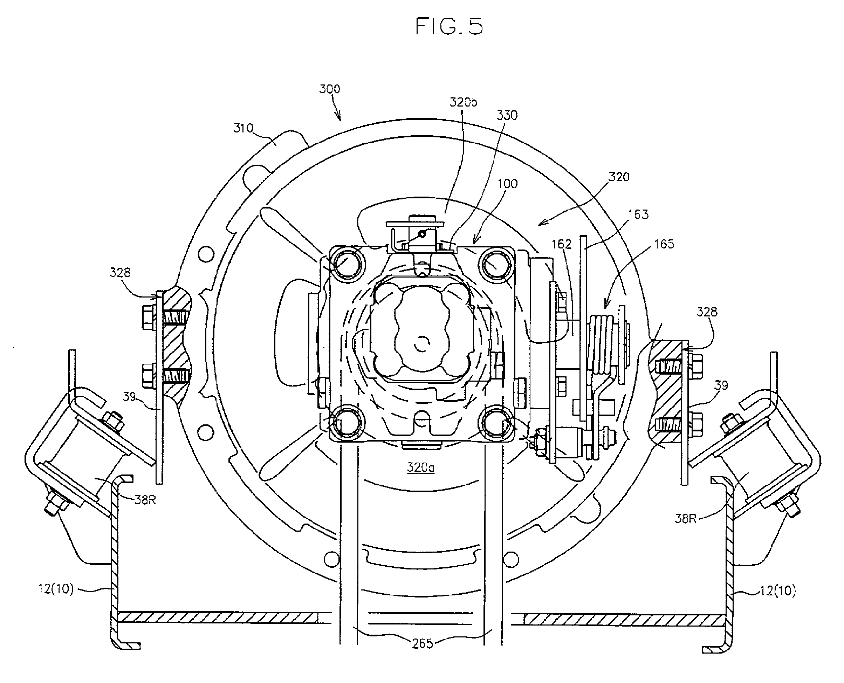

Fig. 5 shows an end view of the hydraulic pump unit 100 taken along line V-V in Fig. 4.

As shown in Figs. 1 and 4, the hydraulic pump unit 100 is operatively connected to the driving power source 30 by way of a shaft transmission mechanism 200, and the working machine 80 is operatively connected to the driving power source 30 by way of an endless belt transmission mechanism 250, in the working vehicle 1A.

According to such a configuration, the vibration of the driving power source 30 is prevented from being propagated to the working machine 80 and the relative movement of the working machine 80 with respect to the driving power source 30 is allowed while preventing lowering in transmission efficiency from the driving power source 30 to the hydraulic pump unit 100 forming one part of the traveling system transmission mechanism and without the need for a complex configuration.

In other words, the working vehicle configured such that power is transmitted from a single driving power source to both the hydraulic pump unit and the working machine, has conventionally adopted a configuration (hereinafter referred to as first prior art configuration) of operatively connecting both the hydraulic pump unit and the working machine to the driving power source by way of shaft transmission mechanisms, or a configuration (hereinafter referred to as second prior art configuration) of operatively connecting both the hydraulic pump unit and the working machine to the driving power source by way of pulley-belt transmission mechanisms.

Specifically, in the first prior art configuration, the hydraulic pump unit includes a pump shaft that is shaft-connected to the driving power source through a shaft coupling, a hydraulic pump main body rotatably driven by the pump shaft, a pump case for accommodating the hydraulic pump main body, a PTO clutch mechanism accommodated in the pump case, a transmission gear mechanism accommodated in the pump case so as to operatively connect the pump shaft and a driving side of the PTO clutch mechanism, and a PTO shaft supported by the pump case while being operatively connected to a driven side of the PTO clutch mechanism.

The PTO shaft is connected to the working machine by way of a transmission shaft arranged with universal joints at both ends.

The first prior art configuration is advantageous in terms of transmission efficiency from the driving power source to the hydraulic pump main body and the working machine, but requires a complex configuration between the PTO shaft and the working machine to enable the working machine to be relatively movable with respect to the driving power source.

In particular, in the articulate type working vehicle as in the present embodiment in which the driving power source is supported by one of the vehicle frames and the working machine is supported by the other vehicle frame, the working machine relatively moves greatly with respect to the driving power source. Therefore, if the first prior art configuration is applied to the articulate type working vehicle, the shaft transmission mechanism between the PTO shaft and the working machine becomes complex and expensive.

Further, the first prior art configuration also poses a problem in that the vibration of the driving power source easily propagates to the working machine, thereby causing the working machine to vibrate.

The second prior art configuration allows the relative movement of the working machine with respect to the driving power source in a relatively easy manner since the working machine is operatively connected to the driving power source by way of the pulley-belt transmission mechanism, but the transmission efficiency of the traveling system transmission mechanism lowers since the hydraulic pump unit is also operatively connected to the driving power source by way of the pulley-belt transmission mechanism.

Furthermore, the second prior art configuration requires a large space for the power transmission structure since the pulley-belt transmission mechanism for transmitting power from the driving power source to the hydraulic pump unit and the pulley-belt transmission mechanism for transmitting power from the driving power source to the working machine are completely independent from each other, thereby enlarging the vehicle and lowering the degree of freedom of design.

In the present embodiment, on the other hand, the hydraulic pump unit 100 is operatively connected to the driving power source 30 by way of the shaft transmission mechanism 200 and the working machine 80 is operatively connected to the driving power source 30 by way of the endless belt transmission mechanism 250, as described above.

Therefore, the vibration of the driving power source 30 could be prevented from being propagated to the working machine 80 and the relative movement of the working machine 80 with respect to the driving power source 30 could be easily allowed while satisfactorily maintaining the transmission efficiency of the traveling system transmission mechanism and without the need for a complex configuration.

As shown in Fig. 4, the shaft transmission mechanism 200 includes a coupling member 210 for directly connecting an output member 35 for outputting rotational power of the driving power source 30 and a pump shaft 110 of the hydraulic pump unit 100.

In the present embodiment, a flywheel serving as the output member 35 is connected to an output shaft 31 of the driving power source 30.

Therefore, the coupling member 210 is configured to directly connect the flywheel and the pump shaft 110.

Specifically, as shown in Fig. 4, the flywheel includes a flywheel main body 36 connected to the output shaft 31 in a relatively non-rotatable manner, and an output shaft part 37 connected to the flywheel main body 36 in a relatively non-rotatable manner and extending in a direction close to the hydraulic pump unit 100 from the flywheel main body 36.

As shown in Figs. 1 and 4, the hydraulic pump unit 100 is supported by the driving power source 30 by way of an attachment member 300 so that the pump shaft 110 faces the output shaft part 37 concentrically.

In the configuration, the coupling member 210 is capable of being connected to one of the pump shaft 110 and the output shaft part 37 in a relatively non-rotatable manner, while being supported by the other of the pump shaft 110 and the output shaft part 37 in a relatively non-rotatable manner.

In the present embodiment, as shown in Fig. 4, the pump shaft 110 has a spline on the outer peripheral surface of a first end 111 (a end facing the output shaft part 37) forming an input end.

The coupling member 21.0 is externally inserted around the pump shaft 110 in a relatively non-rotatable manner and in an axially movable manner by way of the spline, and is configured so as to be connected to an end face of the output shaft part 37 in a relatively non-rotatable manner by way of a fastening member.

In the present embodiment, the coupling member 210 is connected to the output shaft part 37 in a relatively non-rotatable manner by way of the fastening member 215, but alternatively, the coupling member 210 and the output shaft part 37 may be concave-convex-engaged so that the coupling member 210 is relatively non-rotatable with respect to the output shaft part 37. That is, the coupling member 210 may be provided with one of a concave portion and a convex portion that are capable of being engaged to each other, and the output shaft part 37 may be provided with the other of the concave and convex portions.

Furthermore, it is obviously possible that the coupling member 210 is internally inserted into one of the pump shaft 110 and the output shaft part 37. That is, one of the pump shaft 110 and the output shaft part 37 may be formed with an axis hole with a spline that opens to a end surface facing the other of the pump shaft 110 and the output shaft part 37, and the coupling member 210 that is internally inserted into the axis hole in a relatively non-rotatable manner may be connected to the other of the pump shaft 110 and the output shaft part 37 in a relatively non-rotatable manner.

The endless belt transmission mechanism 250 is configured so as to take out the rotational power from a power transmission path extending from the driving power source 30 to the pump shaft 110 of the hydraulic pump unit 100 via the shaft transmission mechanism 200, and to transmit the rotational power to the working machine 80.

Specifically, the endless belt transmission mechanism 250 includes a power takeoff pulley 260 arranged on the power transmission path and a first endless belt 265 wound around the power takeoff pulley 260, as shown in Figs. 1, 2, and 4.

In the present embodiment, the power takeoff pulley 260 is supported by the coupling member 210 in a relatively non-rotatable manner, as shown in Fig. 4.

As described above, the driving power source 30 is supported by the second frame 12 and the working machine 80 is supported by the first frame 11 connected in a swingable manner about a pivot shaft 15 to the second frame 12, in the present embodiment.

Therefore, as shown in Figs. 1 and 2, the endless belt transmission mechanism 250 includes, in addition to the above configuration, an input-side intermediate pulley 270 supported by the pivot shaft 15, the input-side intermediate pulley 270 being wound with the first endless belt 265; an output-side intermediate pulley 275 supported by the pivot shaft 15 so as to be non-rotatable with respect to the input-side intermediate pulley 270; a working machine-side pulley 280 supported by an input shaft of the working machine 80 in a relatively non-rotatable manner; and a second endless belt 285 wound around the output-side intermediate pulley 275 and the working machine-side pulley 280.

In the present embodiment, the input-side intermediate pulley 270 and the output-side intermediate pulley 275 are supported by an intermediate shaft 273 (see Fig. 1) externally inserted around the pivot shaft 15.

As shown in Fig. 1, the driving power source 30 is a horizontal type in which the output shaft 31 extends in the horizontal direction, in the present embodiment.

Therefore, the endless belt transmission mechanism 250 further includes a direction-change pulley 290 for changing the direction of the first endless belt 265 between the power takeoff pulley 260 in which the rotation axis line is directed in the horizontal direction and the input-side intermediate pulley 270 in which the rotation axis line is directed in the vertical direction.

Furthermore, the endless belt transmission mechanism 250 includes a tension pulley 295 that acts on at least one of the first endless belt 265 and the second endless belt 285.

In the present embodiment, the tension pulley 295 acts on the second endless belt 285, as shown in Fig. 2.

As described above, the hydraulic pump unit 100 is supported by the driving power source 30 by way of the attachment member 300 (see Figs. 1 and 4).

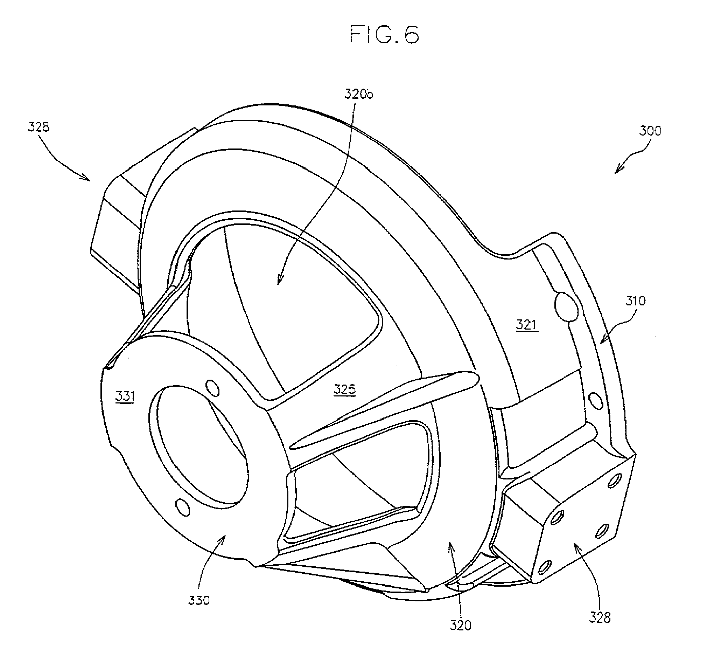

Fig. 6 shows a perspective view of the attachment member 300.

As shown in Figs. 1, 4, and 6, the attachment member 300 has a substantially hollow bowl shape including a base part 310 connected to the driving power source 30; a supporting part 330 for supporting the hydraulic pump unit 100, the supporting part 330 being spaced apart in a direction close to the hydraulic pump unit 100 from the base part 310 so that an installation space for the shaft transmission mechanism 200 and the power takeoff pulley 260 is created between the supporting part 330 and the base part 310; and a sidewall part 320 extending between the base part 310 and the supporting part 330.

The base part 310 has a flange surface 311 (see Fig. 4) connected to a wall surface of the driving power source 30 by way of a fastening member.

The supporting part 330 has a pump mounting surface 331 (see Figs. 4 and 6) extending in a direction orthogonal to the pump shaft 110.

The sidewall part 320 has a proximal end connected to the base part 310 and a distal end connected to the supporting part 330.

In the present embodiment, the sidewall part 320 is a peripheral wall for connecting the peripheral edge of the base part 310 and the peripheral edge of the supporting part 330, as shown in Fig. 6.

Specifically, the sidewall part 320 includes a first peripheral wall 321 for surrounding at least a portion of the output member 35; and a second peripheral wall 325 extending in a direction close to the hydraulic pump unit 100 from the first peripheral wall 321, the second peripheral wall 325 having a diameter smaller than the first peripheral wall 321 so as to surround at least a portion of each of the power takeoff pulley 260 and the shaft transmission mechanism 200, as shown in Figs. 4 and 6.

As shown in Figs. 4 and 5, the sidewall part 320 is provided with a first opening 320a for allowing the first endless belt 265 that is wound around the power takeoff pulley 260 to extend to the outer side from the installation space.

As described above, in the present embodiment, the power takeoff pulley 260 is surrounded by the second peripheral wall 325. Therefore, the first opening 320a is provided in the second peripheral wall 325.

As shown in Figs. 4, 5, and 6, the sidewall part 320 is preferably provided with a second opening 320b that allows a worker to access the power takeoff pulley 260 on a side opposite to the first opening 320a with the pump shaft 110 as the reference.

By arranging the second opening 320b, the workability in attaching and detaching the first endless belt 265 to and from the power takeoff pulley 260 can be facilitated.

As described above, the power takeoff pulley 260 is surrounded by the second peripheral wall 325 in the present embodiment. Therefore, the second opening 320b is also provided in the second peripheral wall 325.

In the present embodiment, as shown in Figs. 5 and 6, the attachment member (300) is provided, at the left and the right in the sidewall part 320, with mounting surfaces 328 to which mounting stays directly or indirectly connected to the vehicle frame 10 are connected, thereby more stably supporting an assembly made up of the driving power source 30 and the attachment member 300.

That is, the driving power source 30 is normally supported in a vibration-absorbing manner by the vehicle frame 10 by way of a pair of right and left rear-side vibration-absorbing mounts and a pair of right and left front-side vibration-absorbing mounts to prevent the vibration of the driving power source 30 from propagating to the vehicle frame 10.

By arranging the mounting surfaces 328, it is possible to support the assembly of the driving power source 30 and the attachment member 300 on the vehicle frame 10 by positioning the pair of rear-side vibration-absorbing mounts 38R, for example, between the mounting stays 39 connected to the mounting surfaces 328 and the vehicle frame 10, as shown in Fig. 5. According to the configuration, it is possible to increase a distance in the vehicle longitudinal direction between the rear-side vibration-absorbing mounts 38R and the front-side vibration-absorbing mounts (not shown) as much as possible, thereby more stably supporting the assembly.

The present embodiment has the following configuration for allowing the attachment and detachment works of the first endless belt 265 with the hydraulic pump unit 100 supported by the driving power source 30 through the attachment member 300.

That is, as shown in Fig. 4, the hydraulic pump unit 100 is configured so that a gap 220 having a size that allows the first endless belt 265 to be passed therethrough is formed between opposing ends of the pump shaft 110 and the output member 35 in the state where the hydraulic pump unit 100 is supported by the driving power source 30 through the attachment member 300.

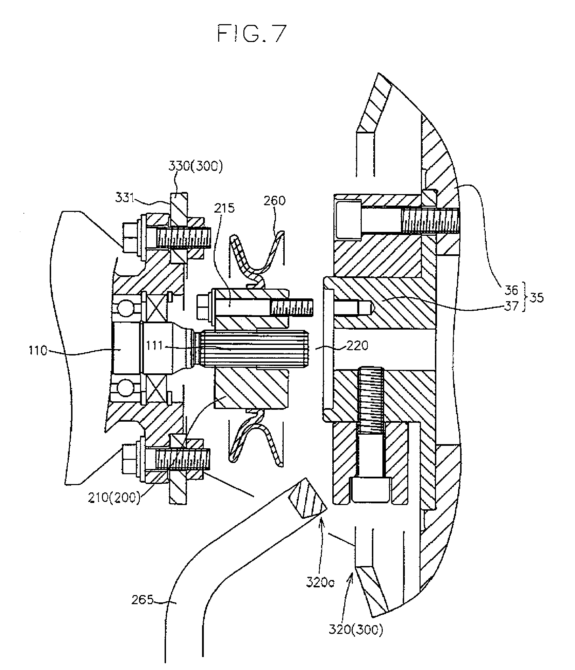

The coupling member 210 supported in a relatively non-rotatable manner by one (the pump shaft 110 in the present embodiment) of the output member 35 and the pump shaft 110 is movable in the axis direction with respect to the one of the output member 35 and the pump shaft 110, and takes a connecting position (see Fig. 4) at which the coupling member 210 is capable of being connected to the other (the output member 35 in the present embodiment) of the output member 35 and the pump shaft 110 and an opening position (see Fig. 7) at which the gap 220 is partially or entirely opened so that the endless belt 265 can be passed trough the gap 220.

According to the configuration, the first endless belt 265 can be passed through the gap 220 with the hydraulic pump unit 100 supported by the driving power source 30 by way of the attachment member 300 by disconnecting the coupling member 210 to the output member 35 and positioning the coupling member 210 at the opening position. Therefore, the attachment and detachment works of the first endless belt 265 to and from the power takeoff pulley 260 can be performed very easily.

In the present embodiment, as shown in Fig. 3, a first axle-driving device 50 includes right and left wheel motor devices 50R, 50L for respectively driving the right and left first driving wheels 21R, 21L.

The right and left first wheel motor devices 50R, 50L have the same configuration with respect to each other, and are attached to the first frame 11 with one of the first wheel motor devices reversed by180 degrees with respect to the other first wheel motor device.

Each wheel motor devices 50R, 50L includes a hydraulic motor unit 500 and a speed reduction gear unit 510.

As shown in Fig. 3, the hydraulic motor unit 500 includes a hydraulic motor main body 501 forming an HST in cooperation with the hydraulic pump main body 120, a motor shaft 502 for supporting the hydraulic motor main body 501, and a motor case 503 for accommodating the hydraulic motor main body 501.

The speed reduction gear unit 510 includes a speed reduction gear mechanism 511 for speed-reducing the rotational output of the motor shaft 502, an output member 512 for outputting the rotational output speed-reduced by the speed reduction gear mechanism 511 to the corresponding driving wheel 21, and a gear case 513 for accommodating the speed reduction gear mechanism 511.

A second axle-driving device 60 includes a single hydraulic motor main body 551 directly or indirectly fluidly connected to the hydraulic pump main body 120, a motor shaft 552 for outputting the rotational power of the hydraulic motor main body 551, a speed reduction gear mechanism 553 for speed-reducing the rotational power of the motor shaft 552, a mechanical differential gear mechanism 554 for differentially transmitting the rotational power speed-reduced by the speed reduction gear mechanism 553 to the pair of right and left second driving wheels 22R, 22L, and an axle case 555 for accommodating the hydraulic motor main body 551, the motor shaft 552, the speed reduction gear mechanism 553 and the differential gear mechanism 554.

The second axle-driving device 60 is not limited to the above-described configuration.

For instance, the second axle-driving device may be configured to include a pair of right and left wheel motor devices for respectively driving the pair of right and left second driving wheels 22R, 22L, or the second axle-driving device may be configured to include a pair of hydraulic motor main bodies fluidly connected so as to form a closed circuit by way of a pair of hydraulic fluid lines, and a motor case for accommodating the pair of hydraulic motor main bodies.

In the present embodiment, as shown in Fig. 3, the first and second axle-driving devices 50, 60 are fluidly connected in series with respect to the hydraulic pump unit 100, and the pair of wheel motor devices 50R, 50L of the first axle-driving device 50 are fluidly connected in parallel to the hydraulic pump unit 100.

That is, as shown in Fig. 3, a forward-movement-high-pressure-side discharge 120F of the hydraulic pump main body 120 is fluidly connected to both a forward-movement-high-pressure-side port 501F of the hydraulic motor main body 501 in the left-side wheel motor device 50L and a forward-movement-high-pressure-side port 501F of the hydraulic motor main body 501 in the right-side wheel motor device 50R.

A forward-movement-low-pressure-side port 501R of the hydraulic motor main body 501 in the left-side wheel motor device 50L and a forward-movement-low-pressure-side port 501R of the hydraulic motor main body 501 in the right-side wheel motor device 50R are fluidly connected to a forward-movement-high-pressure-side port 551F of the hydraulic motor main body 551 in the second axle-driving device 60.

A forward-movement-low-pressure-side port 551R of the hydraulic motor main body 551 in the second axle-driving device 60 is fluidly connected to a forward-movement-low-pressure-side port 120R of the hydraulic pump main body 120.

A detailed configuration of the hydraulic pump unit 100 will now be described.

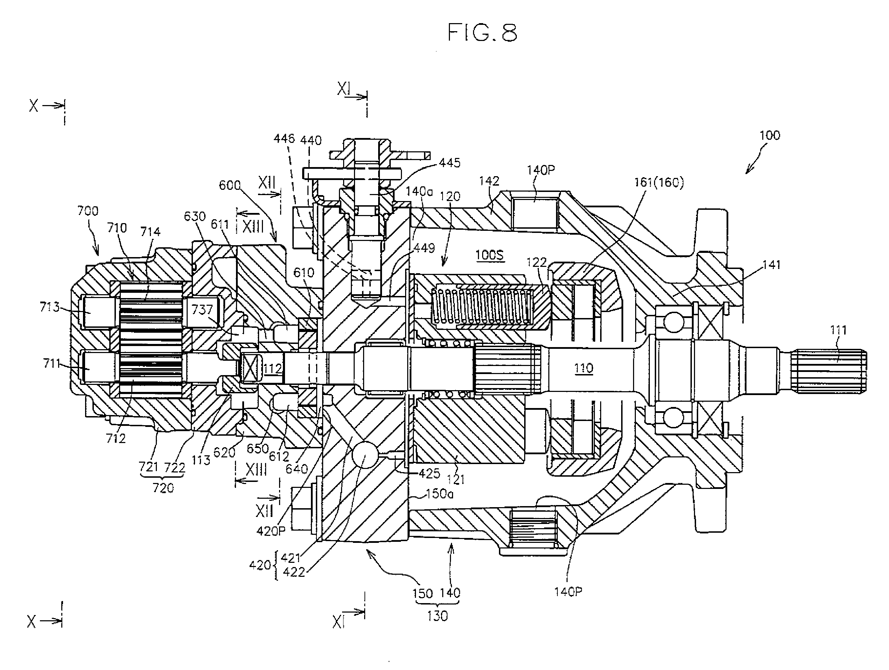

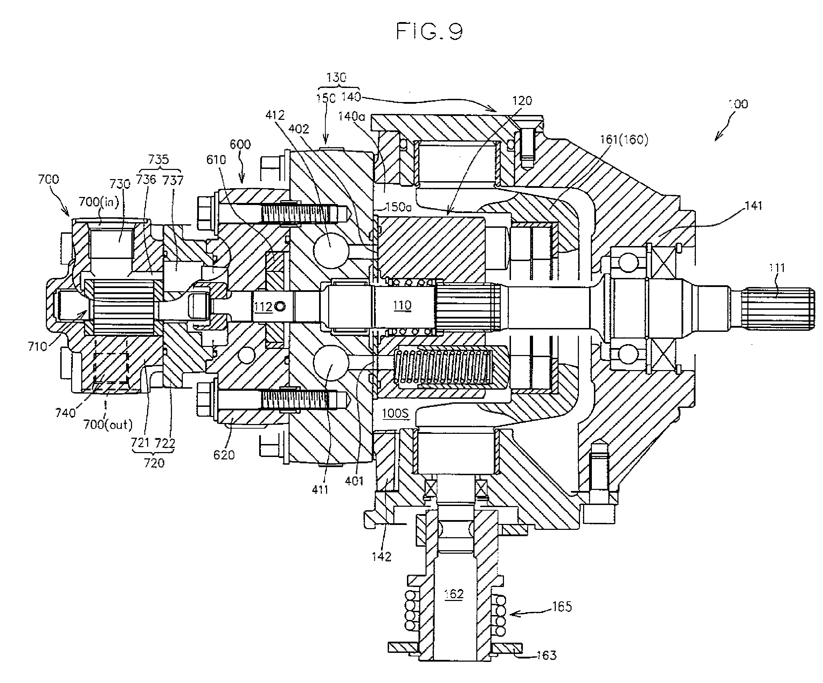

Figs. 8 and 9 show a vertical side view and a traverse plan view of the hydraulic pump unit 100, respectively.

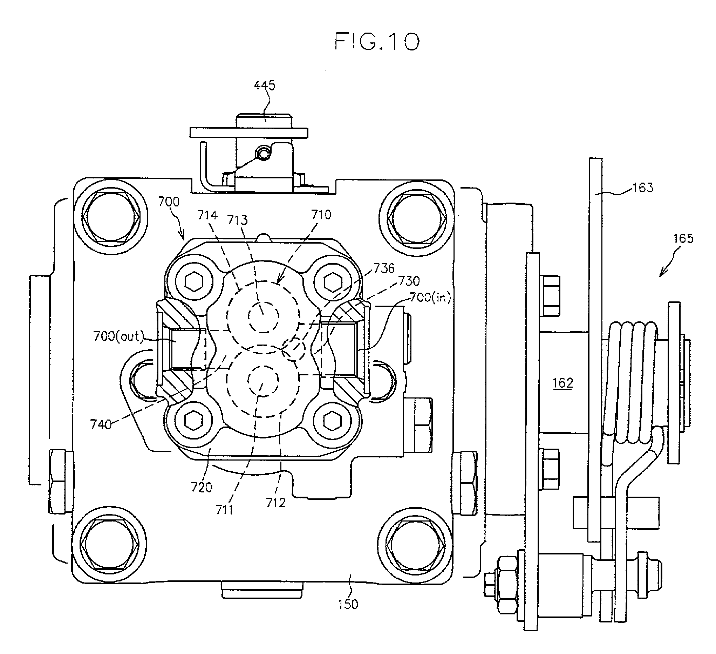

Fig. 10 shows an end view of the hydraulic pump unit 100 taken along line X-X in Fig. 8.

As shown in Figs. 3 and 8 to 10, the hydraulic pump unit 100 includes the pump shaft 110 operatively connected to the driving power source 30 by way of the shaft transmission mechanism 200, the hydraulic pump main body 120 supported by the pump shaft 110 in a relatively non-rotatable manner, and a pump case 130 for supporting the pump shaft 110 and forming a pump space 100S for accommodating the hydraulic pump main body 120.

The pump shaft 110 is supported by the pump case 130 in a rotatable manner about the axis line with the first end 111 forming the input end extending to the outer side.

In the present embodiment, the pump shaft 110 also has a second end 112 on the side opposite to the first end 111 extending to the outer side from the pump case 130, the second end 112 of the pump shaft 110 acting as an output end for outputting rotational power to a first auxiliary pump main body 610 and a second auxiliary pump main body 710, to be described later, as shown in Figs. 8 and 9.

The hydraulic pump main body 120 includes a cylinder block 121 supported by the pump shaft 110 in a relatively non-rotatable manner in the pump space 100S and a plurality of pistons 122 supported by the cylinder block 121 in a relatively non-rotatable manner about the axis line and in a reciprocating manner in the axial direction, as shown in Figs. 8 and 9.

In the present embodiment, the hydraulic pump unit 100 is a variable displacement type in which the suction/discharge amount of the hydraulic pump main body 120 is variable.

Therefore, the hydraulic pump unit 100 includes an output adjusting member 160 in addition to the above configuration.

In the present embodiment, the output adjusting member 160 includes a movable swash plate 161 that defines a reciprocating range of the piston 122 by directly or indirectly engaging with a free end of the piston 122, and a control shaft 162 supported by the pump case 130 in a rotatable manner about the axis line so as to extend in a direction orthogonal to the pump shaft 110, where the movable swash plate 161 can be slanted about a swing center by operating the control shaft 162 about the axis line.

The control shaft 162 is operatively connected to a travel speed-change operation member 6 capable of being manually operated by way of a control arm 163 (see Figs. 9 and 10) and a coupling member (not shown).

In the present embodiment, the movable swash plate 161 can be slanted in both forward and reverse directions with the neutral position in between.

In other words, the movable swash plate 161 slants in the forward movement direction when operating the travel speed-change operation member 6 (see Fig. 1) in the forward movement direction, and the movable swash plate 161 slants in the backward movement direction when operating the travel speed-change operation member 6 in the backward movement direction. In the present embodiment, the speed-change operation member 6 is configured in a see-saw pedal type, but may be a two-pedal type including a dedicated forward pedal and a dedicated backward pedal.

In the present embodiment, the output adjusting member 160 is a trunnion type in which the movable swash plate 161 and the control shaft 162 are integrated, as shown in Fig. 9, but may obviously be a cradle type.

Furthermore, in the present embodiment, the hydraulic pump unit 100 includes a neutral position returning mechanism 165 for returning the movable swash plate 161 to the neutral position when the external operation force on the control shaft 162 is not applied, as shown in Fig. 10.

The pump case 130 is formed with various fluid passages including a pair of hydraulic fluid passages 411 and 412 fluidly connected to the hydraulic pump main body 120.

In the present embodiment, the pump case 130 includes a pump case main body 140, and a port block 150 detachably connected to the pump case main body 140, the fluid passages being formed in the port block 150.

The pump case main body 140 has a hollow shape having an opening 140a that has a size allowing the hydraulic pump main body 120 to be inserted therethrough.

Specifically, the pump case main body 140 includes an end wall 141 positioned on a first side in the axial direction of the pump shaft 110 and a peripheral wall 142 extending to a second side in the axial direction of the pump shaft 110 from the peripheral edge of the end wall 141, and the opening 140a is formed at a free end side of the peripheral wall 142, as shown in Figs. 8 and 9.

In the present embodiment, the end wall 141 is positioned on the input end side of the pump shaft 110 and the opening 140a is positioned on the output end side of the pump shaft 110, as shown in Figs. 8 and 9.

As shown in Fig. 8, the pump case main body 140 preferably includes a port 140P for opening the pump space 100S, which is formed in cooperation with the port block 150 so as to be capable of storing fluid, outward.

The port 140P is fluidly connected to an external tank 90, which will be described later, arranged in the working vehicle 1A by way of a conduit 145 (see Fig. 3).

As shown in Fig. 8, the pump case main body 140 more preferably includes the plurality of ports 140 arranged at different positions about the axis line of the pump shaft 110.

The port block 150 is detachably connected to the pump case main body 140 so as to liquid-tightly close the opening 140a.

As described above, the port block 150 is formed with various fluid passages, in the present embodiment.

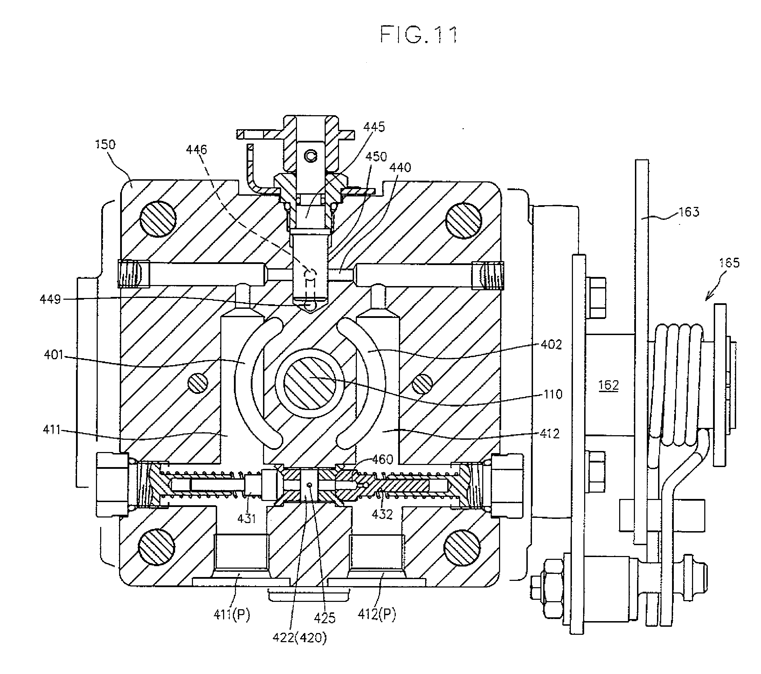

Fig. 11 shows a cross sectional view of the port block 150 taken along line XI-XI in Fig. 8.

As shown in Fig. 11, the port block 150 is provided with a first porting 401, which is in form of a kidney port in the present embodiment, opened to a pump contacting surface 150a (see Figs. 8 and 9) to which the hydraulic pump main body 120 slidably contacts, a second porting 402, which is in form of a kidney port in the present embodiment, opened to the pump contacting surface 150a on a side opposite to the first porting 401 with the pump shaft 110 in between, a first hydraulic fluid passage 411 fluidly connected to the first porting 401, and a second hydraulic fluid passage 412 fluidly connected to the second porting 402.

The first and second hydraulic fluid passages 411, 412 have first ends opened to an outer surface to respectively form first and second hydraulic fluid ports 411(P), 412(P).

One of the first and second hydraulic fluid ports 411(P), 412(P) is the forward-movement-high-pressure-side port and the other is a backward-movement-high-pressure-side port (the forward-movement-low-pressure-side port).

As shown in Figs. 3, 8 and 11, the port block 150 is provided with a charge fluid passage 420 having a first end opened to the outer surface to form a charge port 420(P) and a second end fluidly connected to the pair of first and second hydraulic fluid passages 411, 412 by way of first and second check valves 431, 432, respectively.

Specifically, as shown in Figs. 8 and 11, the charge fluid passage 420 includes a branched charge fluid passage 422 having a first end fluidly connected to the first hydraulic fluid passage 411 by way of the first check valve 431 and a second end fluidly connected to the second hydraulic fluid passage 412 by way of the second check valve 412, and a common charge fluid passage 421 having a first end opened to the outer surface to form the charge port 420(P) and a second end fluidly connected to the branched charge fluid passage 422 between the first and second check valves 431, 432.

In the present embodiment, the charge port 420(P) is positioned on a surface facing the side opposite to the pump contacting surface 150a out of the surfaces of the port block 150, so as to easily receive hydraulic fluid from a first auxiliary pump main body 610 to be later described.

As shown in Figs. 3, 8 and 11, the port block 150 is further provided with a self-suction fluid passage 425 having a first end opened to the pump space 100S and a second end fluidly connected to the branched charge fluid passage 422 between the first and second check valves 431 and 432. A throttle or orifice is preferably arranged in the self-suction fluid passage 425.

By arranging the self-suction fluid passage 425, when one of the pair of first and second hydraulic fluid passages 411 and 412 becomes negative pressure, the fluid is automatically suctioned from the pump space 100S to the hydraulic fluid passage on the negative pressure side, thereby preventing a free wheel phenomenon that may occur, for example, at the time when the working vehicle is parked on a sloping road in a state where the engine is stopped with the HST being in the neutral state.

That is, when the working vehicle is parked with the above-described state, the rotational force is applied to the motor shaft operatively connected to the driving wheel, and the hydraulic motor main body supported by the motor shaft is prompted to perform a pumping action.

In this case, if the pair of hydraulic fluid lines fluidly connecting the hydraulic pump main body and the hydraulic motor main body are filled with hydraulic fluid, braking force acts on the hydraulic motor main body by the hydraulic fluid. At the same time, on the other hand, one of the pair of hydraulic fluid lines becomes to have a high pressure by the pump action of the hydraulic motor main body, and the hydraulic fluid may leak out from the one hydraulic fluid line having a high pressure.

When such a hydraulic fluid leakage occurs, fluid circulates from the other hydraulic fluid line having a low pressure to the one hydraulic fluid line having a high pressure, thereby promoting the hydraulic fluid leakage from the one high pressure side hydraulic fluid line. The hydraulic fluid in the pair of hydraulic fluid lines will be gone in the end, whereby the driving wheels start to freely rotate and the vehicle starts to go down the sloping road (free wheel phenomenon).

On the other hand, the self suction fluid passage 425 could allow the fluid to be automatically supplied to the hydraulic fluid passage having a low pressure out of the first and second hydraulic fluid passages 411 and 412, thereby whereby effectively preventing the free wheel phenomenon.

As shown in Figs. 3 and 11, the port block 150 is further arranged with a bypass fluid passage 440 for fluidly connecting between the first and second hydraulic fluid passages 411 and 412, and a bypass valve 445 for selectively switching a communicating state or a shutoff state of the bypass fluid passage 440.

By arranging the bypass fluid passage 440 and the bypass valve 445, it is possible effectively prevent a pressure difference from being created between the pair of hydraulic fluid lines in forcibly towing the working vehicle 1A at the time of breakdown of the driving power source 30, the HST and the like.

In the present embodiment, the bypass valve 445 is a rotary valve configured so as to fluidly connect the bypass fluid passage 440 to a fluid reservoir (the pump space 100S in the present embodiment) when the bypass valve 445 has the bypass fluid passage 440 in the communicating state, as shown in Figs. 3, 8 and 11.

Specifically, as shown in Figs. 3, 8 and 11, the port block 450 is provided with a drain fluid passage 449 having a first end opened to the pump space 100S.

As shown in Figs. 8 and 11, the bypass valve 445 is formed with a fluid passage for having the bypass fluid passage 440 in the communicating state and fluidly connecting the bypass fluid passage 440 to the drain fluid passage 449.

The bypass valve 445 with the fluid passage 446 is capable of being rotated about the axis line based on an operation so as to communicate the bypass fluid passage 440 by way of the fluid passage 446 and fluidly connect the bypass fluid passage 440 to the drain fluid passage 449 when positioned at the communicating position of a first position about the axis line, and to shut off the bypass fluid passage 440 and fluidly disconnect the bypass fluid passage 440 to the drain fluid passage 449 when rotated about the axis line from the communicating position.

By providing a drain function in the bypass valve 445, it is possible to obtain an advantage of rapidly releasing air that has been entered into the pair of hydraulic fluid lines at the time, for example, when filling the pair of hydraulic fluid lines with hydraulic fluid from the pair of hydraulic fluid lines, in addition to the advantage of preventing the pressure difference from being created between the pair of hydraulic fluid lines in forcibly towing the working vehicle.

In the present embodiment, the following configuration is arranged in relation to the arrangement of the first and second hydraulic fluid passages 411, 412, the branched charge fluid passage 422, and the bypass fluid passage 420.

The first and second hydraulic fluid passages 411, 412 are arranged substantially in parallel with the pump shaft 110 in between, as shown in Fig. 11.

The branched charge fluid passage 422 is formed so as to be orthogonal to the first and second hydraulic fluid passages 411, 412.

The bypass fluid passage 440 is formed so as to be orthogonal to the first and second hydraulic fluid passages 411, 412 on the side opposite to the branched charge fluid passage 420 with the pump shaft 110 as the reference.

According to the configuration, it is possible to efficiently arrange the fluid passages without enlarging the port block 150.

Furthermore, in the present embodiment, the branched charge fluid passage 422 is arranged on the same side as the hydraulic fluid ports 411(P), 412(P) with the pump shaft 110 as the reference, and the bypass fluid passage 440 is arranged on the side opposite to the hydraulic fluid ports 411(P), 412(P) with the pump shaft 110 as the reference, thereby effectively preventing an operation end of the bypass valve 445 from interfering with external conduits fluidly connected to the hydraulic fluid ports 411(P), 412(P) , as shown in Fig. 11.

In the present embodiment, the bypass valve 445 is inserted into an installation hole 450 formed in parallel to the first and second hydraulic fluid passages 411, 412 so that an opening end faces a direction opposite the hydraulic fluid ports 411(P), 412(P).

Preferably, the hydraulic pump unit 100 is provided with a neutral fluid passage for ensuring the neutral state of the HST formed by the hydraulic pump main body 120 and the hydraulic motor main bodies 501, 551 without the need for strict assembly precision.

The neutral fluid passage is, for example, a throttle or orifice 460 formed in at least one of the first and second check valves 431 and 432 so as to fluidly connect the branched charge fluid passage 422 and the corresponding hydraulic fluid passages 411 and 412.

In the present embodiment, the neutral fluid passage is formed in the second check valve 432 interposed between the second hydraulic fluid passage 412 that becomes high pressure in backward movement and the branched charge fluid passage 422, as shown in Figs. 3 and 11.

By arranging the neutral fluid passage in the second check valve 432 that acts on the second hydraulic fluid passage 412 having a high pressure in backward movement, it is possible to effectively ensure the neutral width of the HST without lowering the transmission efficiency of the HST at forward movement of the vehicle that occupies a great amount of the traveling time, although the HST transmission efficiency at backward movement of the vehicle may lower.

Furthermore, in the present embodiment, a first auxiliary pump unit 600 including the first auxiliary pump main body 610 and a second auxiliary pump unit 700 including the second auxiliary pump main body 710 are connected to the hydraulic pump unit 100, as shown in Figs. 8 to 10.

As shown in Figs. 8 and 9, the first auxiliary pump unit 600 includes the first auxiliary pump main body 610 driven by the second end 112 of the pump shaft 110, and a first auxiliary pump case 620 connected to the outer surface (a surface on the side opposite to the surface contacting the pump case main body 140) of the port block 150 so as to surround the first auxiliary pump main body 610.

As shown in Fig. 3, the first auxiliary pump main body 610 serves as a charge pump for replenishing the hydraulic fluid to the HST.

In the present embodiment, the first auxiliary pump main body 610 is a trochoid pump, as shown in Figs. 8 and 9.

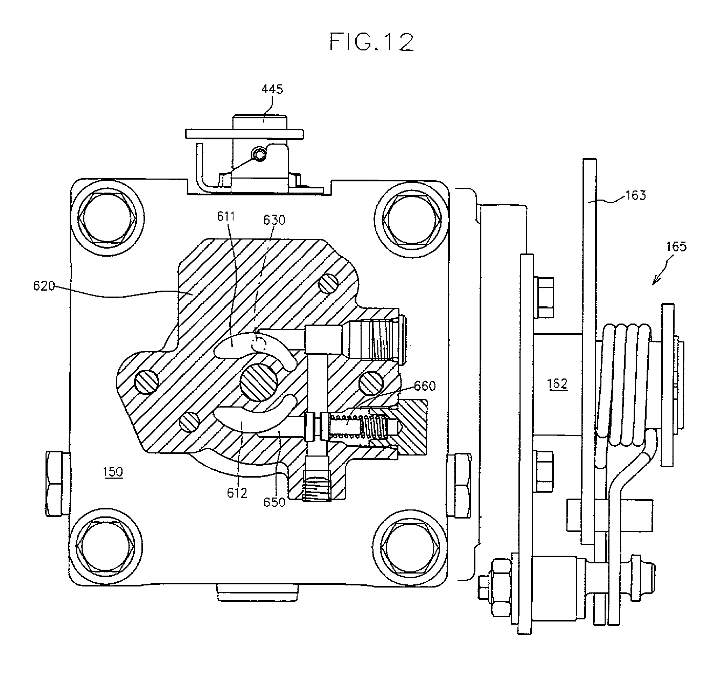

Fig. 12 shows a cross sectional view of the first auxiliary pump case 620 taken along line XII-XII in Fig. 8.

As shown in Figs. 8 and 12, the first auxiliary pump case 620 is provided with a first auxiliary pump suction fluid passage 630 having a first end fluidly connected to a suction side 611 of the first auxiliary pump main body 610, and a first auxiliary pump discharge fluid passage 640 having a first end fluidly connected to a discharge side 612 of the first auxiliary pump main body 610.

As shown in Fig. 8, the first auxiliary pump suction fluid passage 630 has a second end opened to an outer surface on the side opposite to the port block 150.

The first auxiliary pump discharge fluid passage 640 has a second end opened to the contacting surface with the port block 150 so as to be fluidly connected to the charge port 420(P), as shown in Fig. 8.

Furthermore, as shown in Figs. 3 and 8, the first auxiliary pump case 620 includes a hydraulic pressure setting fluid passage 650 having a first end fluidly connected to the discharge side 612 of the first auxiliary pump main body 610, and a relief valve 660 interposed in the hydraulic pressure setting fluid passage 650 so that a primary side faces the discharge side 612 of the first auxiliary pump main body 610.

The relief valve 660 sets the charge pressure of the HST.

In the present embodiment, the hydraulic pressure setting fluid passage 650 has a second end fluidly connected to the suction side 611 of the first auxiliary pump main body 610, so that the relief fluid from the relief valve 660 is returned to the suction side 611 of the first auxiliary pump main body 610, as shown in Figs. 3 and 8.

The second auxiliary pump unit 700 is connected to the outer surface on the side opposite to the port block 150 of the first auxiliary pump unit 600.

In other words, the first and second auxiliary pump units 600, 700 are connected in series to the hydraulic pump unit 100, in the present embodiment.

As shown in Figs. 8 and 9, the second auxiliary pump unit 700 includes the second auxiliary pump main body 710 operatively driven by the second end of the pump shaft 110, and a second auxiliary pump case 720 connected to the outer surface (the surface on the side opposite to the surface contacting to the port block 150) of the first auxiliary pump case 620 so as to surround the second auxiliary pump main body 710.

As shown in Fig. 3, the second auxiliary pump main body 710 acts as a hydraulic pressure source of the hydraulic pressure steering mechanism 70.

In the present embodiment, the second auxiliary pump main body 710 is a gear pump, as shown in Figs. 8 and 9.

Specifically, as shown in Figs. 8 to 10, the second auxiliary pump main body 710 includes a driving shaft 711 connected to the second end 112 of the pump shaft 110 by way of a coupling 113, a driving side gear 712 supported by the driving shaft 711, a driven shaft 713 arranged substantially in parallel to the driving shaft 711, and a driven side gear 714 supported by the driven shaft 713 so as to gear with the driving gear 712.

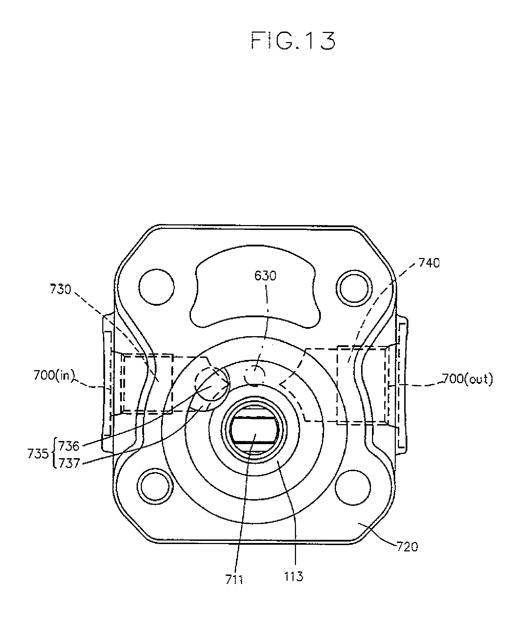

Fig. 13 shows an end view of the second auxiliary pump case 720 taken along line XIII-XIII in Fig. 8.

As shown in Figs. 8, 9 and 13, the second auxiliary pump case 720 is provided with a second auxiliary pump suction fluid passage 730 having a first end opened to the outer surface to form a suction port 700(in) and a second end fluidly connected to a suction side of the second auxiliary pump main body 710, and a second auxiliary pump discharge fluid passage 740 having a first end fluidly connected to a discharge side of the second auxiliary pump main body 710 and a second end opened to the outer surface to form a discharge port 700(out).

In the present embodiment, the second auxiliary pump case 720 is further formed with a branched fluid passage 735.

As shown in Figs. 8, 9 and 13, the branched fluid passage 735 has a first end fluidly connected to the second auxiliary pump suction fluid passage 730 and a second end opened to the contacting surface with the first auxiliary pump case 620 so as to fluidly connect to the second end of the first auxiliary pump suction fluid passage 630.

As shown in Figs. 8 and 9, the second auxiliary pump case 720 includes a plate member 722 contacting the first auxiliary pump case 620, and a case main body 721 connected to the plate member 722 so as to surround the second auxiliary pump main body 710, in the present embodiment.

The second auxiliary pump suction fluid passage 730 and the second auxiliary pump discharge fluid passage 740 are formed in the case main body 721.

The branched fluid passage 735 includes a first branched fluid passage 736 formed in the case main body 721 and a second branched fluid passage 737 formed in the plate member 722.

The first branched fluid passage 736 has a first end fluidly connected to the second auxiliary pump suction fluid passage 730 and a second end opened to a surface facing the plate member 722.

The second branched fluid passage 737 has a first end opened to the surface facing the case main body 721 so as to be fluidly connected to the first branched fluid passage 736 and a second end opened to the contacting surface with the first auxiliary pump case 610 so as to be fluidly connected to the second end of the first auxiliary pump suction fluid passage 630.

In the present embodiment, in a configuration in which the first and second auxiliary pump units 600, 700 are connected in series to the hydraulic pump unit 100, the suction port 700(in) for both the first auxiliary pump main body 610 and the second auxiliary pump main body 710 is formed in the second auxiliary pump case 720 of the second auxiliary pump unit 700 arranged spaced apart from the hydraulic pump unit 100 out of the auxiliary pump units 600, 700, thereby simplifying the conduit configuration for fluidly connecting the fluid source and the suction sides of the first and second auxiliary pump main bodies 610, 710, and effectively preventing the conduit fluidly connected to the suction port 700(in) from interfering with external conduits fluidly connected to the hydraulic fluid ports 411(P), 412(P) of the hydraulic pump unit 100.

In the present embodiment, the working vehicle 1A includes the external tank 90, as shown in Fig. 3, and the suction port 700(in) is fluidly connected to the fluid tank 90 by way of an external conduit 750. A filter 755 is preferably interposed in the external conduit 750.

The discharge port 700(out) is fluidly connected to the hydraulic pressure steering mechanism 70 by way of an external conduit 760.

### Second embodiment

Another embodiment of the present invention will now be described with reference to the accompanying drawings.

The present embodiment is different from the first embodiment only in that the port block 150 in the hydraulic pump unit 100 is replaced with a port block 150B.

Therefore, only the different portion will be described below.

Fig. 14 shows a partial vertical cross sectional view of a hydraulic pump unit 100B including the port block 150B.

Fig. 15 shows a cross sectional view of the port block 150B taken along line XV-XV in Fig. 14.

In the figure, the same reference characters denote the same members as in the first embodiment, and thus the description thereof will be omitted.

The port block 150B is different from the port block 150 in that the check valves 431, 432 are changed to a compound check valve 800, and in that the position of the bypass valve 445 is changed.

Specifically, the port block 150B is provided with first and second compound check valve 800a, 800b respectively interposed between the branched charge fluid passage 422, and the first and second hydraulic fluid passages 411, 412.

In the present embodiment, the neutral width of the HST is ensured by arranging the throttle 460 for constantly fluidly connecting the corresponding hydraulic fluid passages 411, 412 and the branched charge fluid passage 422, in one of the first and second checks valves 431 and 432.

The first and second compound check valves 800a, 800b, on the other hand, are configured to fluidly disconnect the corresponding hydraulic fluid passages 411, 412 to the branched charge fluid passage 422 when the hydraulic pressure of the corresponding hydraulic fluid passages 411, 412 exceeds a predetermined value, and to fluidly connect the corresponding hydraulic fluid passages 411, 412 to the branched charge fluid passage 422 by way of the throttle 460 when the hydraulic pressure of the corresponding hydraulic fluid passages 411, 412 comes below the predetermined value, thereby ensuring the neutral width of the HST while preventing the transmission efficiency of the HST from being deteriorated during traveling.

The first and second compound check valves 800a, 800b have the same configuration with respect to each other. Therefore, only the first compound check valve 800a will be described below.

The first compound check valve 800a includes a hollow valve case 810 arranged so as to liquid-tightly block between the branched charge fluid passage 422 and the corresponding first hydraulic fluid passage 411, the valve case 810 being provided with a charge-fluid-passage-side communication hole 815 for fluidly connecting the internal space to the branched charge fluid passage 422 and a hydraulic-fluid-passage-side communication hole 816 for fluidly connecting the internal space to the first hydraulic fluid passage 411; a hollow check valve main body 820 internally inserted in an axially slidable manner into the internal space of the valve case 810; a relief valve main body 830 internally inserted in an axially slidable manner into an internal space of the check valve main body 820; a check biasing member 840 acting on the check valve main body 820; and a relief biasing member 850 acting on the relief valve main body 830.

The valve case 810 includes a peripheral wall 811 extending in an axial direction, and an end wall 812 arranged at a distal end side of the peripheral wall 811, a proximal end side of the peripheral wall 811 being opened.

The valve case 810 having the configuration is internally inserted into an installation hole 801 formed in the port block 150B.

Specifically, the installation hole 801 is formed concentrically with the branched charge fluid passage 422 so as to have a distal end reaching the branched charge fluid passage 422 and a proximal end opening to the outer surface, as shown in Fig. 15.

The valve case 810 is attached to the installation hole 801 such that the end wall 812 on the distal end side reaches the branched charge fluid passage 422 over the corresponding first hydraulic fluid passage 411 and the proximal end side is positioned on the side opposite to the branched charge fluid passage 422 with the first hydraulic fluid passage 411 in between.

The opening on the proximal end side of the installation hole 801 is closed by a cap 805.

The charge-fluid-passage-side communication hole 815 is formed in the end wall 812 of the valve case 810, and the hydraulic-fluid-passage-side communication hole 816 is formed at a portion positioned on the proximal end side (i.e., on the side opposite to the branched charge fluid passage 422 with the first hydraulic fluid passage 411 in between) from the first hydraulic fluid passage 411 out of the peripheral wall 811 of the valve case 810.

The check valve main body 820 is internally inserted into the internal space of the valve case 810 from the opening on the proximal end side of the valve case 810.

The check valve main body 820 includes a peripheral wall 821 slidably contacting the inner peripheral surface of the peripheral wall 811 of the valve case 810 in a liquid tight manner, and an end wall 822 arranged on a proximal end side of the peripheral wall 821, a distal end side of the peripheral wall 821 being opened.

The check biasing member 840 is arranged so as to bias the check valve main body 820 towards the distal end side.

In the present embodiment, the check biasing member 840 is interposed between the cap 805 and the end wall 822 of the check valve main body 820.

According to the configuration, when hydraulic fluid flows into the internal space of the valve case 810 from the branched charge fluid passage 422 through the charge-fluid-passage-side communication hole 815, the check valve main body 820 is pushed towards the proximal end side against the biasing force of the check biasing member 840 by the hydraulic fluid, whereby the internal space of the valve case 810 fluidly connects to the first hydraulic fluid passage 411 by way of the hydraulic-fluid-passage-side communication hole 816 so that the hydraulic fluid in the valve case 810 flows into the first hydraulic fluid passage 411.

Furthermore, the check valve main body 820 is formed, at the peripheral wall 822, with a check-valve-side communication hole 826 for fluidly connecting the hydraulic-fluid-passage-side communication hole 816 to the internal space of the check valve main body 820 according to the position in the axial direction of the check valve main body 820.

The relief valve main body 830 is internally inserted in a slidably moving manner in the axial direction into the check valve main body 820 from the opening on the distal end side of the check valve main body 820.

Specifically, the relief valve main body 830 has a hollow shape with a peripheral wall 831 extending in the axial direction, and an end wall 832 arranged on the distal end side of the peripheral wall 831.

The relief valve main body 830A is formed, at the end wall 832, with a throttle or orifice 460 for fluidly connecting the internal space of the relief valve main body 830 to the internal space of the valve case 810.

Furthermore, the relief valve main body 830 is provided, at the peripheral wall 831, with a relief-valve-side communication hole 836 for fluidly connecting the check-valve-side communication hole 826 to the internal space of the relief valve main body 830 according to the position in the axial direction of the relief valve main body 830.

The relief biasing member 850 biases the relief valve main body 830 towards the proximal end side.

In the present embodiment, the relief biasing member 850 is interposed between the end wall 812 of the valve case 810 and the end wall 832 of the relief valve main body 830.

The relief valve main body 830 and the relief biasing member 850 having such a configuration operate as follows.

The relief valve main body 830 is pushed towards the proximal end side by the biasing force of the relief biasing member 850 in the state where the hydraulic pressure of the corresponding first hydraulic fluid passage 411 is lower than a predetermined value. The relief-valve-side communication hole 836 is formed at such a position as to communicate with the check-valve-side communication hole 826 in this state.

In other words, when the hydraulic pressure of the corresponding first hydraulic fluid passage 411 is lower than the predetermined value, the first hydraulic fluid passage 411 fluidly connects to the branched charge fluid passage 422 by way of a flow path including the hydraulic-fluid-passage-side communication hole 816, the check-valve-side communication hole 826, the relief valve-side communication hole 836, the internal space of the relief valve main body 830, the throttle 460, the internal space of the valve case 810 and the charge-fluid-passage-side communication hole 815 (see Fig. 16(a)).

Therefore, the neutral state of the HST can be obtained without the need for strict assembly precision.

When the hydraulic pressure of the corresponding first hydraulic fluid passage 411 exceeds the predetermined value, on the other hand, the relief valve main body 830 is pushed towards the distal end side against the biasing force of the relief biasing member 850 by the hydraulic pressure of the hydraulic fluid flowing into the internal space of the relief valve main body 830. In this state, the relief-valve-side communication hole 836 is fluidly disconnected to the check-valve-side communication hole 826 (see Fig. 16(b)).

Therefore, the hydraulic fluid in the first hydraulic fluid passage 411 is prevented from flowing out through the flow path when the vehicle travels and the first hydraulic fluid passage 411 has a high pressure, thereby effectively preventing the HST transmission efficiency from being deteriorated.

The installing position of the bypass valve 445 will now be described.

In the first embodiment, the bypass valve 445 is inserted into the installation hole 450 formed in parallel to the first and second hydraulic fluid passages 411, 412 so that the opening end faces a direction opposite to the hydraulic fluid ports 411(P), 412(P), and the operation end of the bypass valve 45 faces a direction opposite to the hydraulic fluid ports 411(P), 412(P) (see Fig. 11).

In the present embodiment, on the other hand, the bypass valve 445 is arranged concentrically with the bypass fluid passage 440.

Specifically, the port block 150B is formed with an installation hole 450B in place of the installation hole 450, in the present embodiment.

The installation hole 450B is formed concentrically with the bypass fluid passage 440 so as to have a distal end reaching the bypass fluid passage 440 and a proximal end opening to the outer surface.

The bypass valve 445 is inserted into the installation hole 450B from the opening of the installation hole 450B.

According to such a configuration also, the operation end of the bypass valve 445 can be effectively prevented from interfering with the external conduits fluidly connecting to the hydraulic fluid ports 411(P), 412(P).

### Third embodiment

Still another embodiment of the present invention will now be described with reference to the accompanying drawings.

The present embodiment is different from the first embodiment only in the power transmission structure from the driving power source 30 to the pump shaft 110 and the endless belt transmission mechanism 250.

Therefore, only the different portion will be described below.

Fig. 17 shows a vertical side view of the vicinity of the driving power source 30 and the pump unit 100 in a working vehicle 1C to which the present embodiment is applied.

In the figure, the same reference numerals denote the same members as in the first embodiment, and thus the description thereof will be omitted.

In the first embodiment, the flywheel main body 36 and the output shaft part 37 in the output member 35 are in a rigid relationship with respect to each other.

In other words, the rigid flywheel main body 36 and the rigid output shaft part 37 are connected by way of a fastening member 37a in the output member 35 (see Fig. 4). In the configuration shown in Fig. 4, the flywheel main body 36 and the output shaft part 37 may be integrally formed.

In the first embodiment, the coupling member 210 is connected in a relatively non-rotatable manner and in a separable manner to the output shaft part 37 having a rigid relationship with respect to the flywheel main body 36.

In such a configuration, when a variation in angular speed is occurred in the output of the driving power source 30, such a variation is transmitted to the pump shaft 110, thereby causing pulsation in the hydraulic fluid suctioned/discharged by the hydraulic pump main body 120. Such a phenomenon is not preferable as it leads to a variation in vehicle speed of the working vehicle 1 and reduction of riding comfort.

In this regards, the working vehicle 1C according to the present embodiment includes an output member 35C in place of the output member 35.

As shown in Fig. 17, the output member 35C includes the flywheel main body 36, an output shaft part 37C provided as a separate body from the flywheel main body 36, and an elastic member 900 for connecting the flywheel main body 36 and the output shaft part 37C.

In other words, in the output member 35C, the elastic member 900 serving as a damper is interposed between the flywheel main body 36 and the output shaft part 37C that are separate to each other, so that even if a variation in angular speed is occurred in the output of the driving power source 30, the variation in angular speed is absorbed by the elastic member 900.

In the present embodiment, the elastic member 900 is connected to the output shaft part 37C by way of a fastening member 901 while being externally inserted around the output shaft part 37C, as shown in Fig. 17.

Furthermore, the elastic member 900 is connected to the flywheel main body 36 by way of a fastening member 902.

In the illustrated embodiment, the elastic member 900 is connected to the flywheel main body 36 by way of a rigid plate 36C.

Similar to the first embodiment, the coupling member 210 is relatively non-rotatable and axially movable with respect to the pump shaft 110 while supporting the power takeoff pulley 260 in a relatively non-rotatable manner and in an axially movable manner, and takes a connecting position (see Fig. 17) at which the coupling member 210 is capable of being connected to the output member 35C and an opening position (see Fig. 18) at which the gap 220 is partially or entirely opened so that the first endless belt 265 can be passed, in respect to the axial direction of the pump shaft 110.

According to such a configuration, in addition to the advantage that the attachment and detachment works of the first endless belt 265 can be performed with the hydraulic pump unit 100 supported by the driving power source 30 by way of the attachment member 300, it is possible to ensure an advantage in that the angular speed variation of the output of the driving power source 30 can be effectively prevented from propagating to the pump shaft 110.

### Fourth embodiment

Still another embodiment of the present invention will now be described with reference to the accompanying drawings.

The present embodiment is different from the first and third embodiments only in the power transmission structure from the driving power source 30 to the pump shaft 110 and the endless belt transmission mechanism 250.

Therefore, only the different portion will be described below.

Fig. 19 shows a vertical side view of the vicinity of the driving power source 30 and the pump unit 100 in a working vehicle 1D to which the present embodiment is applied.

In the figure, the same reference characters denote the same members as in the first and third embodiments, and thus the description thereof will be omitted.

In the third embodiment, the output shaft part 37C to which the coupling member 210 is detachably connected is connected to the flywheel main body 36 by way of the elastic member 900 serving as a damper, as described above.

Such a configuration is effective in that the angular speed variation of the output of the driving power source 30 can be prevented from propagating to the pump shaft 110, but if tension is applied to the first endless belt 265, the tension acts to decenter the coupling member 210 supporting the power takeoff pulley 260 with respect to the output member 35C (i.e. the tension acts to move the coupling member 210 radially with the axis line of the output member 35C as the reference), whereby unnecessary external force acts on the pump shaft 110.

In other words, in the third embodiment, the output shaft part 37C is connected to the flywheel main body 36 by way of the elastic member 900. In the power transmitting state, the coupling member 210 is connected to the output shaft part 37C. That is, in the power transmitting state, the coupling member 210 supporting the power takeoff pulley 260 is supported by the flywheel main body 36 by way of the elastic member 900.

Thus, when tension is applied to the first endless belt 265 wound around the power takeoff pulley 260 in this state, the tension acts on the coupling member 210 as a force moving the coupling member 210 radially from the axis line of the output member 35C.

Since the coupling member 210 is relatively non-rotatable with respect to the pump shaft 110 as described above, the force to move the coupling member 210 radially from the axis line of the output member 35C acts on the pump shaft 110, resulting in causing damage of the spline or damage of the pump shaft 110 and furthermore lowering the transmission efficiency.

In view of such an aspect, the working vehicle 1D according to the present embodiment adopts the following power transmission structure in regards to the power transmission from the driving power source 30 to the pump shaft 110 and the endless belt transmission mechanism 250.

The working vehicle 1D includes an output member 35D in place of the output member 35C.

As shown in Fig. 19, the output member 35D includes the flywheel main body 36 and an output shaft part 37D rigidly fixed with respect to the flywheel main body 36.

The output shaft part 37D is configured so as to support the power takeoff pulley 260 in a relatively non-rotatable manner.

In the present embodiment, as shown in Fig. 19, a rigid plate 36D is connected in a relatively non-rotatable manner to the flywheel main body 36, and the output shaft part 37D is detachably connected to the rigid plate 36D by way of a fastening member 910.

Furthermore, the working vehicle 1D includes a coupling member 210D in place of the coupling member 210.

Similarly to each embodiment described above, the gap 220 having a size that allows the first endless belt 265 to be passed therethrough is provided between the opposing ends of the pump shaft 110 and the output member 35D.

The coupling member 210D is relatively non-rotatable and axially movable with respect to the first end 111 of the pump shaft 110, and takes a connecting position (see Fig. 19) capable of connecting to the output member 35D and an opening position (see Fig. 20) of partially or entirely opening the gap 220 so that the first endless belt 265 can be passed, in respect to the axial direction of the pump shaft 110.

As shown in Figs. 19 and 20, the coupling member 210D is configured so as to be connected to the output member 35D by way of the elastic member 900.

Specifically, the elastic member 900 is connected to the coupling member 210D, and the coupling member 210D is configured to take the connecting position and the opening position along with the elastic member 900.

The elastic member 900 is configured so as to be connected to the output member 35D.

In the present embodiment, as shown in Figs. 19 and 20, the elastic member 900 is connected to the coupling member 210D by way of a fastening member 911 while being externally inserted around the coupling member 210D.

The elastic member 900 can be connected to the output shaft part 37D by way of a fastening member 912 with the coupling member 210D positioned at the connecting position.

Specifically, the output shaft part 37D includes a main body part 370 which has an end on the upstream side in transmitting direction fixed to the flywheel main body 36 and to which the power takeoff pulley 260 is fixedly mounted; and a flange part 371 which is arranged on the downstream side in the transmitting direction of the main body part 370 and which extends radially outward from the main body part 370.

The elastic member 900 is detachably connected to the flange part 371 of the output shaft part 37D having the above configuration.

In the present embodiment of the above configuration, the following advantages can be obtained.

When the coupling member 210D is positioned at the opening position, an insertion space (the gap 220) for the first endless belt 265 is ensured between the assembly including the coupling member 210D and the elastic member 900, and the output member 35D. Therefore, the attachment and detachment works of the first endless belt 265 can be performed with the hydraulic pump unit 100 supported by the driving power source 30 by way of the attachment member 300.

Furthermore, the power transmission from the driving power source 30 to the pump shaft 110 is performed by way of the output member 35D, the elastic member 900 and the coupling member 210. Therefore, the angular speed variation of the output of the driving power source 30 can be effectively prevented from being propagated to the pump shaft 110 by the damper action of the elastic member 900.

Furthermore, the power takeoff pulley 260 is supported by the output shaft part 37D rigidly fixed with respect to the flywheel main body 36. Thus, the output shaft part 37D does not move radially from the axis line of the flywheel main body 36 even if the tension is applied on the first endless belt 265. Therefore, the tension on the first endless belt 265 is effectively prevented from acting on the pump shaft 110, thereby effectively preventing the pump shaft 110 to be damaged and also preventing the transmission efficiency to be deteriorated.

### Fifth embodiment

Still another embodiment of the present invention will now be described with reference to the accompanying drawings.

The present embodiment is different from the first and third embodiments only in the power transmission structure from the driving power source 30 to the pump shaft 110 and the endless belt transmission mechanism 250.

Therefore, only the different portion will be described below.

Fig. 21 shows a vertical side view of the vicinity of the driving power source 30 and the pump unit 100 in a working vehicle 1E to which the present embodiment is applied.

In the figure, the same reference characters denote the same members as in each embodiment described above, and thus the description thereof will be omitted.

The working vehicle 1E in the present embodiment includes an output member 35E and a coupling member 210E in place of the output members and the coupling members in the working vehicles 1A to 1D in the embodiments described above.

The output member 35E is a member for outputting rotational power of the driving power source 30, and is the flywheel main body 36 in the present embodiment, as shown in Fig. 21.

The coupling member 210E is supported in a relatively non-rotatable manner and in an axially movable manner by the pump shaft 110, and is configured so as to be detachably connected with respect to the output member 35E.

Specifically, as shown in Fig. 21, the coupling member 210E includes a rigid upstream-side member 211 detachably connected to the output member 35E, a rigid downstream-side member 212 supported by the pump shaft 110 in a relatively non-rotatable manner and in an axially movable manner, and the elastic member 900 for connecting the upstream-side member 211 and the downstream-side member 212.

The upstream-side member 211. supports the power takeoff pulley 260 in a relatively non-rotatable manner.

In the present embodiment, the upstream-side member 211 includes a main body part 211a that has an end on the upstream side in the transmitting direction directly or indirectly connected to the flywheel main body 36 and that supports the power takeoff pulley 260; and a flange part 211b that is arranged on the downstream side in the transmitting direction of the main body part 211a and that extends radially outward from the main body part 211a.

In the present embodiment, the upstream-side member 211 is connected to the flywheel main body 36 by way of a rigid plate 211c.

Specifically, the upstream-side member 211 further includes the rigid plate 211c fixedly attached to the end on the upstream side in the transmitting direction of the main body part 211a by way of a fastening member 211d, as shown in Fig. 21.

The rigid plate 211c includes a central part 2110 contacting the main body part 211a, and an outward extending part 2111 extending radially outward from the central part 2110.

The outward extending part 2111 is preferably extended radially outward of the power takeoff pulley 260 fixedly attached to the main body part 2110.

The upstream-side member 211a is detachably connected to the flywheel main body 36 by a fastening member 2112 that is inserted into a slit or a hole formed in the outward extending part 2111.

The outward extending part 2111 is preferably arranged at a position other than the uppermost point of the power takeoff pulley 260. According to such a configuration, the workability of the attachment and detachment of the first endless belt 265 could be facilitated.

As shown in Fig. 21, the elastic member 900 is connected to the downstream-side member 212 by way of a fastening member 911 in a state of being externally inserted around the downstream-side member 212, and connected to the upstream-side member 211 by way of a fastening member 912.

In the present embodiment, the elastic member 900 is connected to the flange part 211b of the upstream-side member 211 by way of the fastening member 912.

The downstream-side member 212 is supported by the pump shaft 110 in a relatively non-rotatable manner and in an axially movable manner by way of a spline formed at the first end 111 of the pump shaft 110.

Specifically, the downstream-side member 212 is axially movable with respect to the pump shaft 110 so as to take connecting position (see Fig. 21) at which the upstream-side member 211 connected to the downstream-side member 212 by way of the elastic member 900 is capable of connecting to the output member 35E and an opening position (see Fig. 22) at which a gap 220 through which the first endless belt 265 can be passed could be ensured between the upstream-side member 211 and the output member 35E, in respect to the axial direction of the pump shaft 110.

In the present embodiment, as shown in Fig. 21, the coupling member 210E is configured so that a gap 220' having a length corresponding to the length of the gap 220 is formed between the pump shaft 110 and the upstream-side member 211 when the downstream-side member 212 is positioned at the connecting position, and configured so as to ensure the gap 220 between the upstream-side member 211 and the output member 35E using the gap 220' when the downstream-side member 212 is positioned at the opening position.

Alternatively, the upstream-side member 211 may be formed with an axis hole into which the pump shaft 110 can be inserted in a relatively rotatable manner, where the gap 220 can be ensured by configuring such that the first end of the pump shaft 110 is inserted into the axis hole when the downstream-side member 212 is positioned at the opening position.

Similarly to the fourth embodiment, the present embodiment having the above-described configuration could simultaneously have the advantage that the attachment and detachment works of the first endless belt 265 can be performed with the hydraulic pump unit 100 supported by the driving power source 30 by way of the attachment member 300, the advantage that the angular speed variation of the output of the driving power source 30 can be effectively prevented from being propagated to the pump shaft 110, and the advantage that tension of the first endless belt 265 can be prevented from acting on the pump shaft 110.

This specification is by no means intended to restrict the present invention to the preferred embodiments and the modified embodiments set forth therein. Various modifications to the power transmission structure may be made by those skilled in the art without departing from the spirit and scope of the present invention as defined in the appended claims.

## Claims

1. A power transmission structure of a working vehicle (1A-1E) that is configured so that a hydraulic pump unit (100) and a working machine (80) are operatively driven by a rotational power from a single driving power source (30), wherein
the hydraulic pump unit (100) is operatively connected to the driving power source (30) through a shaft transmission mechanism (200), and
the working machine (80) is operatively connected to the driving power source (30) through an endless belt transmission mechanism (250).

2. A power transmission structure of a working vehicle (1A-1E) according to claim 1, further comprising an attachment member (300) that has a base part (310) connected to the driving power source (30) and a supporting part (330) for supporting the hydraulic pump unit (100), the attachment member (300) being configured so that an installation space for the shaft transmission mechanism (200) is created between the base part (310) and the supporting part (330), wherein
the endless belt transmission mechanism (250) includes a power takeoff pulley (260) arranged in the installation space so as to take out the rotational power from a power transmitting path extending from the driving power source (30) to a pump shaft (110) of the hydraulic pump unit (100) through the shaft transmission mechanism (200), and an endless belt (265) that is wound around the power takeoff pulley (260), and
the attachment member (300) is provided with a first opening (320a) for allowing the endless belt (265) to extend outward from the installation space.

3. A power transmission structure of a working vehicle (1A-1E) according to claim 2, wherein
the shaft transmission mechanism (200) includes a coupling member (210, 210E) that is supported in a relatively non-rotatable manner by one of an output member (35, 35C, 35E) for outputting the rotational power of the driving powers source (30) and a pump shaft (110) of the hydraulic pump unit (100) and that is capable of being connected to the other of the output member (35, 35C, 35E) and the pump shaft (110) in a relatively non-rotatable manner, and
the power takeoff pulley (260) is supported in a relatively non-rotatable manner by the coupling member (210, 210E).

4. A power transmission structure of a working vehicle (1A-1E) according to claim 3, wherein
the pump shaft (100) and the output member (35, 35C) are positioned coaxially to each other in a state where a gap (220) having a size that allows the endless belt (265) to be passed therethrough is provided between the opposing ends of the pump shaft (110) and the output member (35, 35C), and
the coupling member (210) is movable along the axis line direction with respect to the one of the output member (35, 35C) and the pump shaft (110) so as to take a connecting position at which the coupling member (210) is capable of being connected to the other of the output member (35) and the pump shaft (110) and an opening position at which the gap (220) is partially or entirely opened so that the endless belt (265) can be passed trough the gap (220).

5. A power transmission structure of a working vehicle (1A-1E) according to claim 2, wherein
the shaft transmission mechanism (200) includes a coupling member (210E) that is supported by the pump shaft (100) in a relatively non-rotatable manner and in a movable manner along the axis line direction, and that is detachably connected to an output member (35E) for outputting the rotational power of the driving power source (30),
the coupling member (210E) includes a rigid upstream-side member (211) that is detachably connected to the output member (35E) and that supports the power takeoff pulley (260) in a relatively non-rotatable manner, a rigid downstream-side member (212) that is supported by the pump shaft (110) in a relatively non-rotatable manner and in a movable manner along the axis line direction, and the elastic member (900) that connects the upstream-side member (211) and the downstream-side member (212), and
the coupling member (210E) is configured so that a gap (220) having a size that allows the endless belt (265) could be passed therethrough is created between the upstream-side member (211) and the output member (35E) by disconnecting the upstream-side member (211) to the output member (35E) and moving the downstream-side member (212) to a downstream side in a power transmitting direction along the axis line direction of the pump shaft (110).

6. A power transmission structure of a working vehicle (1A-1E) according to claim 4, wherein
the output member (35C) includes a main body part (36) operatively connected to the driving power source (30), an output shaft part (37C) separate from the main body part (36), and an elastic member (900) for connecting the main body part (36) and the output shaft part (37C), and
the coupling member (210) is supported by the pump shaft (110) in a relatively non-rotatable manner and a movable manner along the axis line direction, and is capable of being connected to the output shaft part (37C) when positioned at the connecting position.

7. A power transmission structure of a working vehicle (1A-1E) according to claim 2, wherein
the pump shaft (100) and the output member (35D) are positioned coaxially to each other in a state where a gap (220) having a size that allows the endless belt (265) to be passed therethrough is provided between the opposing ends of the pump shaft (110) and the output member (35D),
the shaft transmission mechanism (200) includes a coupling member (210D) supported in a relatively non-rotatable manner and in a movable manner along the axis line direction by one of an output member (35D) for outputting the rotational power of the driving powers source (30) and a pump shaft (110) of the hydraulic pump unit (100), the coupling member (210D) taking a connecting position at which the coupling member (210D) is capable of being connected to the other of the output member (35D) and the pump shaft (110), and an opening position at which the gap (220) is partially or entirely opened so that the endless belt (265) can be passed, in respect to the axis line direction, and
the power takeoff pulley (265) is supported by the output member (35D) in a relatively non-rotatable manner.

8. A power transmission structure of a working vehicle (1A-1E) according to claim 7, wherein
the coupling member (210D) is provided with an elastic member (900), and
the coupling member (210D) is connected to the other of the output member (35D) and the pump shaft (110) through the elastic member (900) when positioned at the connecting position.

9. A power transmission structure of a working vehicle (1A-1E) according to any one of claims 2 to 8, wherein
the attachment member (300) includes the base part (310), the supporting part (330) and a sidewall part (320) connecting the base part (310) and the supporting part (330) so that the installation space is defined between the base part (310) and the supporting part (330), and
the sidewall part (320) is provided with a second opening (320b) at a side opposite to the first opening (320a) with the pump shaft 110 as the reference, the second opening (320b) allowing an access to the power takeoff pulley (260).

10. A power transmission structure of a working vehicle (1A-1E) according to claim 9, wherein
the attachment member (300) is provided, at the sidewall (320), with mounting surfaces (328) to which mounting stays directly or indirectly connected to a vehicle frame (10) are connected.

11. A power transmission structure of a working vehicle (1A-1E) according to any one of claims 2 to 10, wherein
first and second auxiliary pump units (600, 700) are connected in series to a side opposite to the side connecting to the attachment member (300) of the hydraulic pump unit (100),
the second auxiliary pump unit (700) is spaced away than the first auxiliary pump unit (600) from the hydraulic pump unit (100) and has a second auxiliary pump case (720) formed with a common suction port (700(in)) for both of a first auxiliary pump main body (610) of the first auxiliary pump unit (600) and a second auxiliary pump main body (710) of the second auxiliary pump unit (700).
